# EUROPEAN PATENT SPECIFICATION

(11) **EP 4 446 513 B1**
(45) Date of publication and mention of the grant of the patent: **28.10.2026**
(21) Application number: 24169253.2
(22) Date of filing: 09.04.2024
(51) Int. Cl.: E04F 10/06, E04F 10/10, E04H 4/10

(54) **A DEVICE COMPRISING TWO PLURALITIES OF PHOTOVOLTAIC CELLS; A SYSTEM FOR COVERING A POOL WITH TWO POOL COVERS THAT COMPRISE SUCH DEVICE; AND METHOD FOR COVERING A POOL COVER OF A POOL USING SUCH DEVICE**
EINE VORRICHTUNG, DIE ZWEI GRUPPEN VON PHOTOVOLTAIKZELLEN UMFASST; EIN SYSTEM ZUM ABDECKEN EINES SCHWIMMBECKENS MIT ZWEI SCHWIMMBECKENABDECKUNGEN, DIE EINE SOLCHE VORRICHTUNG UMFASSEN; UND EIN VERFAHREN ZUM ABDECKEN EINES SCHWIMMBECKENS MIT EINER SCHWIMMBECKENABDECKUNG UNTER VERWENDUNG EINER SOLCHEN VORRICHTUNG
UN DISPOSITIF COMPRENANT DEUX ENSEMBLES DE CELLULES PHOTOVOLTAÏQUES ; SYSTÈME DESTINÉ À RECOUVRIR UNE PISCINE À L'AIDE DE DEUX COUVERTURES DE PISCINE COMPRENANT CE DISPOSITIF ; ET PROCÉDÉ POUR RECOUVRIR UNE PISCINE À L'AIDE D'UNE COUVERTURE DE PISCINE UTILISANT CE DISPOSITIF

(30) Priority: 10.04.2023 US 202363495202 P
(43) Date of publication of application: 16.10.2024
(73) Proprietor: Solaredge Technologies Ltd., Herzeliya 4673335 (IL)
(72) Inventor: YOSCOVICH, Ilan, 4673335 Herzeliya (IL); GALIN, Yoav, 4673335 Herzeliya (IL)
(74) Representative: V.O.

(56) References cited:
- WO-A1-2022/208498
- DE-U1- 202021 000 149
- SE-C2- 529 139
- US-A1- 2004 055 633
- US-A1- 2009 031 641
- US-A1- 2010 294 331

## Description

### BACKGROUND

Pool covers may be used to minimize evaporation from both outdoor and indoor pools. Covering a pool when not in use may be an effective means of reducing pool heating costs, and may prevent dirt from entering the pool. Awnings are examples of other types of shading devices which are used to cover a surface or provide shade. For example, there are shading devices which, when positioned near a building, prevent the penetration of solar radiation into the building in the summer. These shading devices may allow thermal comfort and energy savings. There are two main categories of shading devices: fixed and mobile devices. Fixed shading devices may include overhangs, horizontal/vertical louvers, and egg-crates. Mobile shading devices may include awnings, Venetian blinds, vertical blinds, and pool covers.

US2004/0055633 A1 discloses a device intended to be used as a shade, awning, blind and swimming pool cover includes a photocurrent-generating fabric and a support for winding and storing the fabric. The support is formed by an axisymetric tube of regular polygonal cross-section around the periphery of which the fabric is wound. The photo current-generating fabric includes a layer of interconnected photovoltaic cells.

### SUMMARY

According to a first aspect, the present invention provides a device according to claim 1. According to a second aspect, the present invention provides a system for covering a pool according to claim 14. According to a third aspect, the present invention provides a method for opening a pool cover of a pool.

Systems, devices, and methods are described that may include a photovoltaic pool cover. Systems, devices, and methods are described that may include a photovoltaic awning.

### BRIEF DESCRIPTION OF THE DRAWINGS

The present disclosure is illustrated by way of example and is not limited in the accompanying figures in which like reference numerals indicate similar elements and in which:
Figure 1A shows a perspective view schematic illustration of a portion of an example device in an open configuration, in accordance with one or more embodiments of the present disclosure;
Figure 1B shows a perspective view schematic illustration of an example device in a closed configuration, in accordance with one or more embodiments of the present disclosure;
Figure 1C shows a schematic illustration of an example system comprising an example device, in accordance with one or more embodiments of the present disclosure;
Figure 2A and Figure 2B show perspective view schematic illustrations of an example pool cover in a closed configuration and in an open configuration, respectively, in accordance with one or more embodiments of the present disclosure;
Figure 3 shows an example flow chart for changing the configuration of a device, in accordance with one or more embodiments of the present disclosure;
Figure 4A shows a perspective view schematic illustration of an example pool cover in an open configuration, in accordance with one or more embodiments of the present disclosure;
Figure 4B shows a perspective view schematic illustration of an example pool cover in an open configuration, in accordance with one or more embodiments of the present disclosure;
Figure 5A and Figure 5B show perspective view schematic illustrations of an example awning cover in an open configuration and in a closed configuration, respectively, in accordance with one or more embodiments of the present disclosure;
Figure 6A, Figure 6B, and Figure 6C show perspective view schematic illustrations of exemplary folding sheets, in accordance with one or more embodiments of the present disclosure;
Figure 7A, Figure 7B, Figure 7C, and Figure 7D show side view and cross sectional view schematic illustrations of exemplary rolling sheets, in accordance with one or more embodiments of the present disclosure;
Figure 8A and Figure 8B show side view schematic illustrations of a building with an example awning, in accordance with one or more embodiments of the present disclosure; and
Figure 9 shows an example flow chart for changing the configuration of a device, in accordance with one or more embodiments of the present disclosure.

### DETAILED DESCRIPTION

In the following description, reference is made to the accompanying drawings, which form a part hereof, and in which are shown, by way of illustration, various examples of the disclosure. It is to be understood that the examples shown and/or described are non-exclusive, and other examples may be practiced, and structural and functional modifications may be made without departing from the scope of the present disclosure as defined by the appended claims.

Although the subject matter has been described in language specific to structural features and/or methodological acts, it is to be understood that the subject matter defined in the embodiments discussed herein and the claims is not necessarily limited to the specific features or acts described. Rather, the specific features and acts described herein are disclosed as example forms of implementing the claims.

Systems, devices, and methods are described that may include a photovoltaic pool cover. Systems, devices, and methods are described that may include a photovoltaic spa cover. Systems, devices, and methods are described that may include a photovoltaic awning.

The device includes a sheet comprising a first plurality of photovoltaic (PV) cells and a second plurality of PV cells, and a motor configured to actuate the sheet between an open configuration and a closed configuration, wherein the first plurality of PV cells are disposed on a first portion of the sheet such that, in the open configuration, the first plurality of PV cells are exposed to sunlight, and wherein the second plurality of PV cells are disposed on a second portion of the sheet such that, in the closed configuration, the second plurality of PV cells are exposed to sunlight.

The device may include a rotatable shaft. A sheet may comprise a plurality of PV cells. The sheet may be configured to be wrapped around the rotatable shaft. An end of the sheet may be coupled to the rotatable shaft. A controller may be configured to cause the rotatable shaft to rotate. In an open configuration, the sheet extends away from the rotatable shaft. In a closed configuration, the sheet may be wrapped around the rotatable shaft and the second plurality of PV cells are exposed. The sheet may comprise a portion configured to expose at least some of the second plurality of PV cells (e.g., to sun) when in the closed configuration.

The system includes a first pool cover and a second pool cover, wherein the first pool cover and the second pool cover comprise: a sheet comprising a first plurality of photovoltaic (PV) cells and a second plurality of PV cells; a motor configured to actuate the sheet between an open configuration and a closed configuration; and an attachment component configured to attach to a portion of a perimeter wall of the pool, wherein the first plurality of PV cells are disposed on a first portion of the sheet such that, in the open configuration, the first plurality of PV cells are exposed to the sun, wherein the second plurality of PV cells are disposed on a second portion of the sheet such that, in the closed configuration, the second plurality of PV cells are exposed to the sun, and wherein the attachment component of the first pool cover and the attachment component of the second pool cover are attached to different portions of the pool perimeter wall.

The device may include a rail or frame comprising an attachment component configured to attach to a building, a photovoltaic (PV) sheet comprising a plurality of PV cells, the sheet being coupled to the attachment component and configured to move along the rail or frame, a motor configured to control a movement of the sheet, a controller configured to control an operation of the motor, wherein in an open configuration, the sheet extends away from the attachment component, wherein in a closed configuration, the sheet may be partially folded, and wherein the sheet may comprise a portion configured to expose one of the plurality of PV cells when the sheet is in the closed configuration. The device may be used as a cover, a canopy, or a sunshade. The device may be a pool cover. The device may be an awning or an awning cover.

A method for opening a pool cover of a pool includes operating, via a controller, a motor, rotating, via the motor, a rotatable shaft to unwrap a sheet from the rotatable shaft and to extend the sheet outwards from the rotatable shaft, and inflating, via an inflation device, an inflatable portion of the sheet, thereby enabling floatation of the sheet on water of the pool.

A method for closing a pool cover may include operating, via a controller, a motor, rotating, via the motor, a rotatable shaft to wrap a photovoltaic (PV) sheet around the rotatable shaft, deflating, via an inflation device, an inflatable portion of the sheet, thereby enabling wrapping the sheet without trapping air therein.

A pool cover system for a pool may include a rotatable shaft, a sheet comprising a plurality of cells, the sheet being configured to wrap around the rotatable shaft, a first end of the sheet being coupled to the rotatable shaft, a controller configured to control a rotation of the rotatable shaft, wherein in an open configuration, the sheet extends away from the rotatable shaft, wherein in a closed configuration, the sheet may be wrapped around the rotatable shaft, and wherein the sheet may comprise a portion configured to expose one of the plurality of PV cells in the closed configuration, and a set of connectors configured to electrically couple the sheet to a filter of the pool.

The device may include one or more connectors that may connect the plurality of PV cells. The one or more connectors may be configured to connect the plurality of PV cells to any one or more of auxiliary equipment, an electrical energy storage device, a battery, a grid, a pool subsystem, a spa subsystem, a circulation subsystem, home equipment, a water heater, a pool filter, a pool pump, and the like. Additionally or alternatively, the one or more connectors may be configured to connect the plurality of PV cells to any suitable components that may be utilized in conjunction with the operation and/or maintenance of swimming pools and/or spas, which may optionally comprise variable speed compressors and/or fans, cleaners, chlorinators, etc. The one or more connectors may be configured to connect the plurality of PV cells to a building and/or an electrical network of a building. The one or more connectors may include an electrical connector assembly. The one or more connectors may include a rotating electrical connector. The one or more connectors may include a slip ring. The slip ring may have a rotating interface and at least one sliding electrical contact, and may be configured to pass electrical signals and power across a rotating interface using sliding electrical contacts, for example.

In the closed configuration, the sheet may be wound about a rotatable shaft. In the closed configuration, the sheet may be folded or accordion folded. The second plurality of PV cells may be disposed on an opposite side of the sheet as the first plurality of PV cells. The second plurality of PV cells may be disposed on a same side of the sheet as the first plurality of PV cells. The device may include a ridge, and wherein the second plurality of PV cells are located on the ridge.

The sheet may include air pockets or chambers configured to float the sheet on top of a swimming pool in the open configuration. The air pockets may be configured to deflate when the sheet may be actuated from the open configuration to the closed configuration. The device may include a collapsible frame. The first plurality of PV cells may be configured to provide a direct current (DC) voltage not exceeding 30 volts.

The first plurality of PV cells and the second plurality of PV cells may include a flexible substrate. The first plurality of PV cells and the second plurality of PV cells may be thin-film solar cells. The device may include an electrical energy storage device. The electrical energy storage device may be configured to receive power from the second plurality of PV cells when the sheet is in the closed configuration. The electrical energy storage device may be configured to receive power from the first plurality of PV cells when the sheet is in the open configuration.

The attachment component of the first pool cover and the attachment component of the second pool cover may be attached to opposite edges of the pool perimeter wall. The attachment component of the first pool cover and the attachment component of the second pool cover may be attached to adjacent edges of the pool perimeter wall. The attachment component of the first pool cover and the attachment component of the second pool cover may be attached to one or more arched edges of the pool. The system may include a third pool cover, wherein an attachment component of the third pool cover may be attached to a portion of the pool perimeter wall. The system may include a fourth pool cover, wherein an attachment component of the fourth pool cover may be attached to a portion of the pool perimeter.

The plurality of PV cells may comprise flexible, thin-film PV cells. The sheet may be configured to provide power to any one or more of the various components as discussed herein. This may include, for instance, a pool subsystem, one or more filters of the pool, one or more pumps, a heater/chiller of the pool, and the like. The device may be configured to provide power to an off-the-grid pool filter. The device may be operated off-the-grid. One of the plurality of PV cells of the sheet may be configured to provide power to the controller. The sheet may be configured to couple to one or more loads. For example, the loads may be appliances or devices (such as, computers, power tools, welders, kilns, swimming pools, swimming pool heaters, swimming pool chillers, swimming pool chlorinators, spas, electric vehicle (EV) chargers, variable speed compressors and/or fans etc.). The load may include a pool circulation system.

The device may include a motor configured to rotate the rotatable shaft. The sheet may be configured to provide power to the motor. The device may include a motor configured to operate an actuator. The actuator may be configured to actuate the sheet between the open configuration and the closed configuration. The plurality of PV cells may include bifacial PV cells. In the closed configuration, the sheet may be wrapped around the rotatable shaft such that the thin-film PV cells are exposed to sunlight.

The sheet may include an inflatable portion. The inflatable portion may be positioned at a portion of a perimeter of the sheet. The device may include an inflation device configured to inflate or deflate the inflatable portion. One of the PV cells of the sheet may be configured to provide power to the inflation device. The sheet may be waterproof. An upper surface of the sheet may be hydrophobic.

The sheet may be configured to generate between 5 to 30 volts. The rail may include an extendable rod or arm. The controller may be configured to control one or more angles of one or more folds of the sheet. The controller may be configured to calculate the one or more angles of the one or more folds of the sheet based upon a time of day. The controller may be configured to calculate the one or more angles of the one or more folds of the sheet based upon sensor data. The controller may be configured to calculate the one or more angles of the one or more folds of the sheet based upon data indicative of a position of the sun.

The controller may be configured to calculate the one or more angles of the one or more folds of the sheet based on data indicative of one or more shaded areas of the sheet. One or more angles may be angles in which an amount of power generated by the sheet may be maximized. Two or more of the one or more folds of the sheet may have the same angle. Two or more folds of the sheet may have different angles. The system may include an inflation device configured to inflate or deflate an inflatable portion of the sheet.

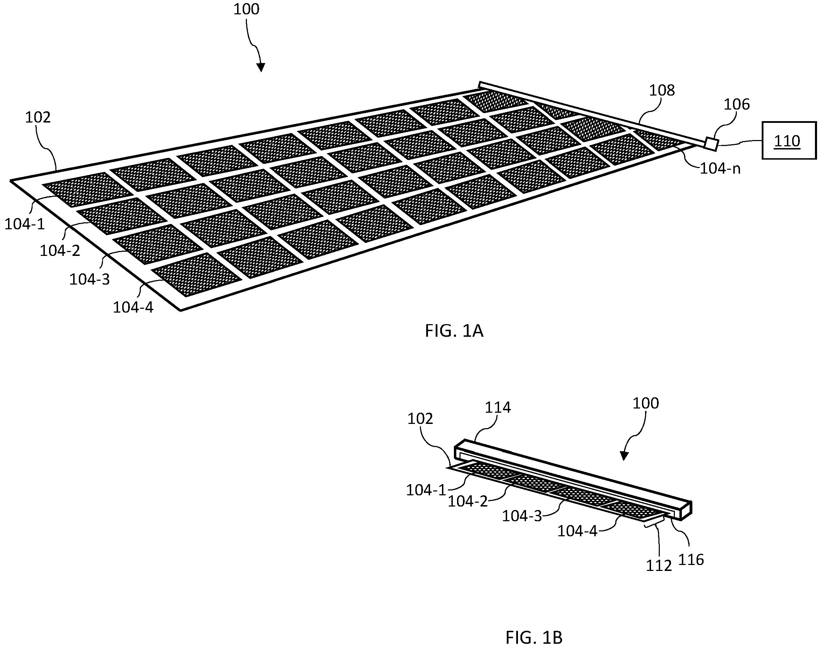

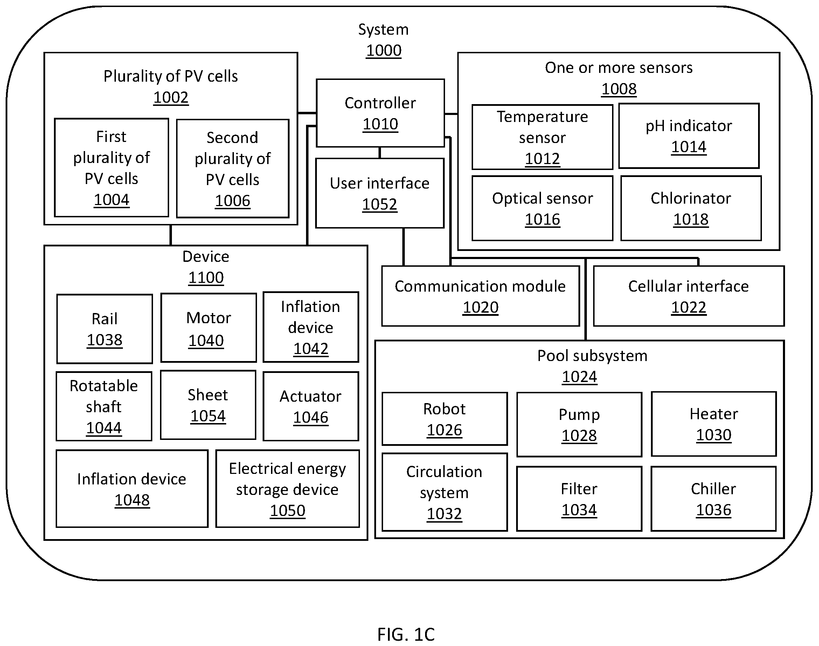

Reference is made to Figure 1A, which shows a perspective view schematic illustration of a portion of an example device in an open configuration, and to Figure 1B, which shows a perspective view schematic illustration of an example device in a closed configuration, and Reference is made to Figure 1C, which shows a schematic illustration of an example system comprising an example device, in accordance with one or more embodiments of the present disclosure.

The system 1000 may include a device 100/1100. The device 100/1100 may include a sheet 102/1054. The sheet 102/1054 may include a plurality of photovoltaic (PV) cells 104-1/104-2/104-3/.../104-n/1002 (collectively referred to herein as a plurality of PV cells 104/1002 or a first plurality of PV cells 104/1002/1004). The device 100/1100 may include a motor 106/1040, which may be configured to actuate the sheet 102/1054 between an open configuration and a closed configuration. The device 100/1100 may further include a rotatable shaft 108/1044. The sheet 102/1054 may be configured to be wrapped around the rotatable shaft 108/1044. The sheet 102/1054 may have an end coupled to the rotatable shaft 108/1044. The device 100/1100 may include a controller 110/1010 configured to control the motor 106/1040 and to thereby cause the rotatable shaft 108/1044 to rotate. In an open configuration, the sheet 102/1054 may extend away from the rotatable shaft 108/1044. In a closed configuration, the sheet 102/1054 may be wrapped around the rotatable shaft 108/1044. The sheet 102/1054 may include a portion 112 having one or more of the plurality of PV cells 104/1002 of the sheet 102/1054 that are exposed (e.g. to the sun) when the device 100/1100 is in the closed configuration. The term "extended" as used herein to describe the extension of a sheet (e.g. the sheet 102/1054) with respect to a rotatable shaft (e.g. the rotatable shaft 108/1044) may comprise, for example, a direction that is substantially tangential to the direction of rotation of a relevant rotatable shaft.

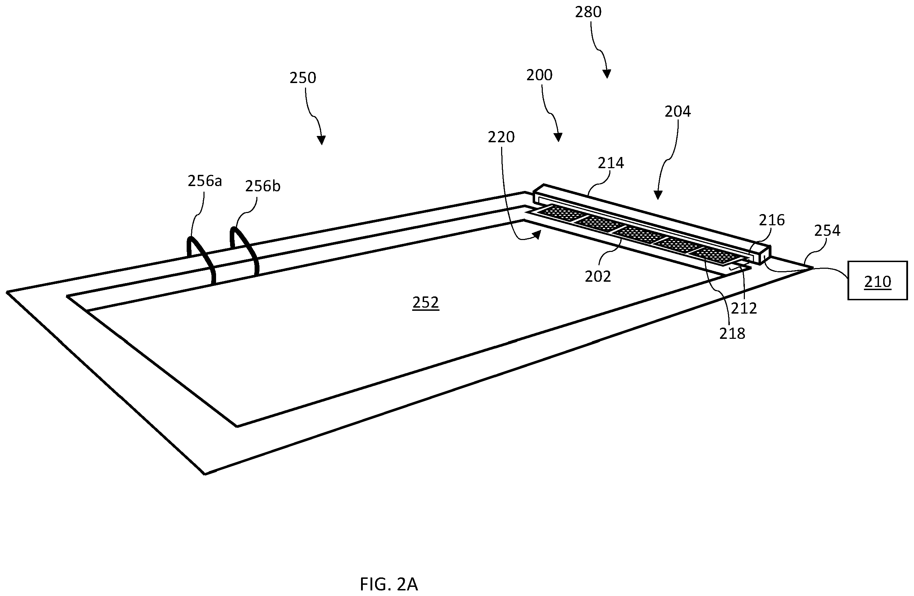

With respect to Figures 1A-1C and Figures 2A-2B, the plurality of PV cells 104/204/1002 may include a first plurality of PV cells 218/1004 and a second plurality of PV cells 220/1006. The sheet 102/202/1054 may include the second plurality of cells (or PV cells) 220/1006. The first plurality of PV cells 218/1004 may be disposed on a first portion of the sheet 102/202/1054 such that, in the open configuration, the first plurality of PV cells 218/1004 are exposed to sunlight. The second plurality of PV cells 220/1006 are disposed on a second portion of the sheet 102/202/1054 such that, in a closed configuration, the second plurality of PV cells 220/1006 may be exposed to sunlight. As used herein, the term "exposed to sunlight" may include a plurality of cells facing "up," e.g. in a direction opposite to the surface of the pool water, and/or oriented towards the sky such that sunlight may illuminate (either directly or indirectly) a plurality of PV cells so oriented.

The sheet 102/1054 may be a cover, such as a pool cover or an awning for example. The sheet 102/1054 may be flexible. The sheet 102/1054 may be made from a polymer. The sheet 102/1054 may include a fabric. The sheet 102/1054 may be shaped to cover a specific object, such as, for example, a pool, a deck, a balcony, or a yard. The shape of the sheet 102/1054 may be predetermined or preordered by a user based on the shape of the object which the sheet 102/1054 is to cover. The sheet 102/1054 may include a single layer of material, wherein the plurality of PV cells 104/204/1002 may be positioned on a side the sheet 102/1054. The sheet 102/1054 may include a plurality of layers of materials, wherein one or more electrically conductive elements associated with the plurality of PV cells 104 may be positioned between two layers of the sheet 102/1054. The sheet 102/1054 may include a plurality of layers of materials, wherein one or more non-electrically conductive elements associated with the plurality of PV cells 104/1002 may be positioned between two layers of the sheet 102/1054. For example, a conductive element associated with the plurality of PV cells 104/1002 may be a cable, and the cable may be placed between two layers of the sheet 102/1054. For example, the non-electrically conductive element may include a clamp or button configured to fix the position of one or more of the plurality of PV cells 104/1002. The plurality of layers may include the same or different materials. The plurality of layers may have different densities. The plurality of layers may be configured to trap air (or a gas) therein, thereby inflating the sheet 102/1054, such as described in greater detail herein.

The sheet 102/1054 may have a first end configured to be coupled to the rotatable shaft 108/1044. The first end may include a portion of the perimeter of the sheet 102/1054. The first end may include a portion of a surface of the sheet 102/1054. The sheet 102/1054 may be configured to wrap around the rotatable shaft 108. The sheet 102/1054 may be configured to smoothly wrap around the rotatable shaft 108/1044. The sheet 102/1054 may be configured to wrap around the rotatable shaft 108/1044 during (or due to) a rotation of the rotatable shaft 108/1044.

The plurality of PV cells 104/1002 may be positioned on the sheet 102/1054. The plurality of PV cells 104/1002 may be located on a first surface of the sheet 102/1054, wherein in the open configuration, the first surface of the sheet 102/1054 may be exposed to sunlight. A second surface of the sheet 102/1054 may be opposing the first surface, such that in the open configuration the second surface of the sheet 102/1054 may be facing the pool. In the open configuration, the second surface of the sheet 102/1054 may be resting on the water in the pool.

The plurality of PV cells 104/1002 may be positioned on a first layer of the sheet 102/1054. The second layer of the sheet 102/1054 may include a plurality of openings configured to expose the plurality of PV cells 104/1002 positioned on the first layer of the sheet 102. The second layer of the sheet 102/1054 may be at least partially translucent, thereby exposing the plurality of PV cells 104/1002. Advantageously, a translucent second layer of the sheet 102/1054 may enable exposure of the plurality of PV cells 104/1002 to sunlight without requiring a plurality of openings in the second layer of the sheet 102/1054.

The sheet 102/1054 may include a plurality of PV cells woven into or otherwise integrated into the sheet 102/1054. The sheet 102/1054 may be a power generating sheet. One or more layers of the sheet 102/1054 may include a power generating fabric. The power generating fabric may include a fabric composed of a plurality of PV cells. For example, the power generating fabric may be printed using a 3D printer.

The plurality of PV cells 104/1002 may be configured to provide a direct current (DC) voltage not exceeding 30 volts, or any other suitable voltage. For example, the plurality of PV cells may be configured to provide a direct current (DC) voltage not exceeding 50 volts. As another example, the plurality of PV cells may be configured to provide a direct current (DC) voltage not exceeding 25 volts.

The sheet 102/1054 may be configured to generate a voltage of any suitable range, e.g. between 5 to 30 volts, or in other words, the plurality of PV cells on the sheet 102/1054 may be configured to generate between 5 to 30 volts. The sheet 102/1054 may be configured to generate between 5 to 30 volts, between 15 to 25 volts, between 3 to 18 volts, between 3 to 30 volts, etc.

The plurality of PV cells 104/1002 may be flexible. The plurality of PV cells 104/1002 may include a flexible substrate. The plurality of PV cells 104/1002 may be adhered onto the sheet 102/1054. The plurality of PV cells may be flush with the sheet 102/1054. The plurality of panels 104/1002 may cover a majority of the sheet 102/1054. The plurality of panels 104/1002 may be configured to conform with the shape of the sheet 102/1054. The plurality of panels 104/1002 may be configured to conform with the shape of the sheet 102/1054 at a closed configuration of the device or, in other words, when the sheet 102/1054 is wrapped around the rotatable shaft 108/1044.

The rotatable shaft 108/1044 may comprise an axis of rotation about which the sheet 102/1054 and/or the plurality of PV cells 104/1002 are wound. The rotatable shaft 108/1044 may include a pole or rod. The rotatable shaft 108/1044 may be rigid, semi-flexible, or flexible. The rotatable shaft 108/1044 may be connected to a portion of the sheet 102/1054. The rotatable shaft 108/1044 may be connected to the first end of the sheet 102/1054. The rotatable shaft 108 may be coupled to the motor 106/1040. The rotatable shaft 108/1044 may be connected to an actuator 1046 coupled to the motor 106/1040. The rotatable shaft 108/1044 may be operated, using the controller 110/1010, by operation of the motor 106/1040. The rotatable shaft 108/1044 may be operated, using the controller 110/1010, by operation of the actuator 1046 connected to the motor 106/1040.

The motor 106/1040 may be configured to operate the actuator 1046. The motor 106/1040 may include a device that provides rotational movement. The motor 106/1040 may include a wheel or one or more gears. The motor 106/1040 may be connected to the actuator 1046. The motor 106/1040 may be configured to switch the sheet 102/1054 from the open configuration to the closed configuration. The motor 106/1040 may be configured to switch the sheet 102/1054 from the closed configuration to the open configuration. The actuator 1046 may be configured to actuate the sheet 102/1054 between the open configuration and the closed configuration. The actuator 1046 may be a device configured to provide linear motion. The actuator 1046 may include a piston and/or a rod that may be pushed in a linear manner when voltage is applied. The actuator 1046 and/or the motor 106/1040 may operate using power produced in one or more of the plurality of PV cells 104/1002. The actuator 1046 and/or the motor 106/1040 operates using power produced in one or more of the plurality of PV cells 104/1002 in the exposed portion 112 of the sheet 102/1054, in a closed configuration of the sheet 102/1054. The controller 110/1010 may be in communication with the motor 106/1040. The controller 110/1010 may be configured to cause the rotatable shaft 108/1044 to rotate.

The controller 110/1010 may be connected to the motor 106/1040 via a cable or wired connection. The controller 110/1010 may be connected to the motor 106/1040 via a wireless connection. The controller 110/1010 may comprise a communication module 1020 and/or a cellular interface 1022. The communication module 1020 or the cellular interface 1022 may be configured to communicate with a user interface 1052. The communication module 1020 or the cellular interface 1022 may be configured to communicate with the motor 106/1040. The cellular interface 1022 may comprise at least one of a subscriber identity module (SIM) card or internet card. The communication module 1020 may comprise wired and/or wireless communication protocols (e.g., one or more protocols of power line communication, Ethernet, Bluetooth^{™}, Wi-Fi, ZigBee^{™}, and/or a cellular network).

The device 100/1100 may include one or more sensors 1008, such as, for example, temperature sensors 1012, humidity sensors, pressure sensors, optical sensors 1016, pH sensor (or pH indicator 1014), and the like. The controller 110/1010 may be configured to change the configuration of the sheet 102/1054 based on data received from the one or more sensors 1008. The controller 110/1010 may be configured to determine a configuration for the sheet 102/1054 based on data received from the one or more sensors 1008. The controller 110/1010 may be configured to determine a configuration for the sheet 102/1054 based on the time of day, year, month, season, and/or the like. The controller 110/1010 may be configured to receive (or collect) weather information using a connection to the Internet. The controller 110/1010 may be configured to search and/or receive data associated with the current weather and/or a weather forecast. The controller 110/1010 may be configured to determine a configuration for the sheet 102/1054 based on the weather or the weather forecast. The controller 110/1010 may operate using power produced in one or more of the plurality of PV cells 104/1002. The controller 110/1010 may operate using power produced in one or more of the plurality of PV cells 104/1002 in the exposed portion 112 of the sheet 102/1054, e.g. in a closed configuration of the sheet 102/1054.

The one or more sensors 1008 may be integrated as part of the sheet 102/1054 to provide sensor data indicative of any suitable physical measurements and/or a physical state, e.g. the water temperature, to determine the position of the cover with respect to the water level or other objects, etc. The one or more sensors 1008 may be used to detect and/or identify objects, which may be used to enable compatibility with one or more robots 1026 or robotics and/or automated systems, such as cleaning systems for instance.

For example, the one or more temperature sensors 1012 may be configured to measure the pool temperature. The one or more temperature sensors 1012 may be configured to measure the temperature of the water (or liquid) in the pool. The one or more temperature sensors 1012 may be configured to measure the ambient temperature of the air surrounding the pool. The one or more temperature sensors 1012 may be configured to measure the temperature of the sheet 102/1054. The one or more temperature sensors 1012 may be configured to measure the temperature of any one or more of the plurality of PV cells 104/1002.

The one or more sensors 1008 may include an optical sensor 1016 configured to detect a particle level in the pool water. The one or more sensors 1008 may include a chlorine sensor or a chlorinator 1018 configured to measure a chlorine concentration in the pool water. The one or more sensors 1008 may be configured to measure a water lever of the pool water.

The sheet 102/1054 may have more than one open configuration and/or more than one closed configuration, such as described in greater detail herein. In the open configuration, such as depicted in Figure 1A, the sheet 102/1054 may extend away from the rotatable shaft 108/1044. In the open configuration, the plurality of PV cells 104/1002 may extend away from the rotatable shaft 108/1044. In the open configuration, the sheet 102/1054 may be completely unwound form the rotatable shaft 108/1044. In the open configuration, the sheet 102/1054 may be at least partially wound around the rotatable shaft 108/1044. In the open configuration, the sheet 102/1054 may be configured to cover a pool. In the open configuration, the sheet 102/1054 may be used as an awning.

The sheet 102/1054 including the plurality of PV cells as described herein may be referred to as "sheet" or a "PV sheet".

In the closed configuration, such as described in Figure 1B, the sheet 102/1054 may be wound about the rotatable shaft 108/1044. In the closed configuration, the plurality of PV cells 104/1002 may be wrapped around the rotatable shaft 108/1044. In the closed configuration, the sheet 102/1054 may be at least partially wound around the rotatable shaft 108/1044. In the closed configuration, the sheet 102/1054 may be completely wound around the rotatable shaft 108/1044. In the closed configuration, at least a portion 112 of the sheet 102/1054 may be exposed.

The portion 112 may include a ridge. The portion 112 may be located near a second end of the sheet 102/1054. The portion 112 may be located at a second end of the sheet 102/1054. The second end of the sheet 102/1054 may be on an opposing side of the first end of the sheet 102/1054. The second end of the sheet 102/1054 may be on an edge of the sheet 102/1054. The second end of the sheet 102/1054 may be located at at least a portion of the perimeter of the sheet 102/1054. The second end of the sheet 102 may be adjacent to the first end of the sheet 102/1054.

The portion 112 may include one or more of the plurality of PV cells 104/1002. The portion 112 may be located on the sheet 102/1054 such that, in a closed configuration of the sheet 102/1054, the one or more PV cells located on the portion 112 may be exposed to sunlight. The portion 112 may be made of the same material as the rest of the sheet 102/1054. The portion 112 may be more rigid than the rest of the sheet 102/1054.

The device 100/1100 may include an attachment component configured to attach to a portion of a perimeter wall of the pool. The attachment component may be part of a housing 114. The attachment component may include anchors, clamps, or the like. The attachment component may be removeable, such as, for example, with a zipper. The device 100/1100 may include a housing 114. The housing 114 may include a box configured to contain any one or more of the motor 106/1040, the actuator 1046, and/or the rotatable shaft 108/1044. The housing 114 may be configured to house the sheet 102/1054, e.g. in a closed configuration thereof. The housing 114 may be configured to house the controller 110/1010. The housing 114 may include an opening 116 configured for the sheet 102/1054 to fit therethrough. The opening 116 may be a slit for example. The opening 116 may have a width sufficient for the sheet 102/1054 to extend out of the housing 114 through the opening 116. In the closed configuration, the sheet 102/1054 may be located in the housing 114. In the closed configuration, such as depicted in Figure 1B, the portion 112 may extend out of the housing 114.

In the closed configuration, the sheet 102/1054 may be folded in the housing 114. The sheet 102/1054 may be folded towards the housing 114 and/or within the housing 114, instead of being wrapped around the rotatable shaft 108/1044. The sheet 102/1054 may be folded like an accordion, or in other words, the sheet 102/1054 may be accordion folded having any suitable number of folds. For example, the sheet 102/1054 may be folded in a half fold, in which the sheet 102/1054 may be folded once around the middle of the sheet 102/1054. As another example, the sheet 102/1054 may be folded in a Z-fold, in which the sheet 102/1054 may be folded in alternating directions into two or more parts. The Z-fold may include a plurality of fold lines in which the sheet 102/1054 may be folded. The fold lines may be essentially parallel to each other. As yet another example, the sheet 102/1054 may be folded in a tri-fold, in which two opposing sides of the sheet 102/1054 are folded towards each other.

The device 100/1100 may be configured to operate off-the-grid, i.e. independently of and/or without being connected to an electrical grid. The device 100/1100 may be configured to operate without connection to another power source. The device 100/1100 may be configured to operate without a connection to the grid. The device 100/1100 may be configured to operate independently by using power generated by one or more of the plurality of PV cells 104/1002. The one or more of the plurality of PV cells 104/1002 may be configured to power (or provide power to) any one or more of the controller 110/1010, the motor 106/1040, and/or the rotatable shaft 108/1044.

Thus, the device 100/1100 may be configured to bootstrap, or self-start. For example, the sheet 102/1054 may be in an open configuration during the night and, at a certain time during the day, the pool may be opened for use. The controller 110/1010, operating using power from the one or more of the plurality of PV cells 104/1002, may command a switch (e.g. via the use of one or more control signals) from the open configuration to a closed configuration of the sheet 102/1054, wherein the switch may be operated by the motor 106/1040 using power from the one or more of the plurality of PV cells 104/1002.

The device 100/1100 may include an electrical energy storage device 1050. The electrical energy storage device 1050 may include a battery. The electrical energy storage device 1050 device may be configured to receive power from the plurality of PV cells 104/1002. The electrical energy storage device 1050 may be configured to receive power from the plurality of PV cells 104/1002 when the sheet 102/1054 is in the closed configuration or when the sheet 102/1054 is in the open configuration.

The electrical energy storage device 1050 may be configured to communicate with the controller 1010. The controller 1010 may receive data from the electrical energy storage device 1050. The data may include any one or more of the total energy stored in the electrical energy storage device 1050, the maximum energy storage capacity of the electrical energy storage device 1050, the time in which the electrical energy storage device started receiving energy for storage (for example, in each day of the week), and the like.

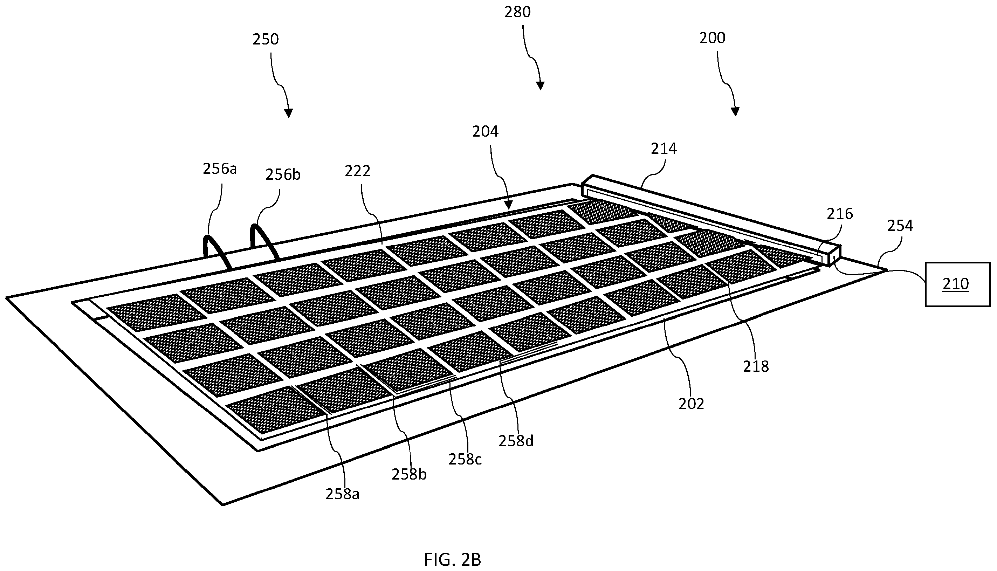

Reference is made to Figure 2A and to Figure 2B, which show perspective view schematic illustrations of an example pool cover in a closed configuration and an open configuration, respectively. The device 200 depicted in Figure 2A and Figure 2B may include one or more aspects of the device 100 of Figure 1A and Figure 1B as described herein. The device 200 may be incorporated in the system 1000, in addition to, or in place of device 100. The reference numbers of Figure 2A and Figure 2B may correspond to reference numbers of Figure 1A, Figure 1B, and Figure 1C (for example, the plurality of PV cells 1002, 104 and 204, the sheet 1054, 102 and 202, etc.) in order to transfer properties and features which may be common. The plurality of PV cells 204 may have one or more of the same characteristics as the plurality of PV cells 104 and/or 1002.

The device 200/1100 may be a pool cover. The sheet 202/1054 of the device 200/1100 may be configured to extend over (or cover) a pool, such as the pool 250. In the open configuration, the device 200/1100 may be configured to insulate the pool 250. The plurality of PV cells 204/1002 may be configured to provide power to a pool subsystem 1024, which may include any suitable number and/or type of components such as those noted herein for example. The pool subsystem 1024 may include any one or more of one or more pool filters 1034, a heater 1030, a chiller 1036, one or more pumps 1038, a circulation system 1032, and/or a robot 1026 (such as a pool cleaning robot). The plurality of PV cells 204/1002 may be configured to provide power to one or more filters 1034 of the pool 250. The plurality of PV cells 204/1002 may be configured to provide power to a heater 1030 of the pool 250. The plurality of PV cells 204/1002 may be configured to provide power to a chiller 1036 of the pool 250. The plurality of PV cells 204/1002 may be configured to provide power to the one or more pumps 1038. The plurality of PV cells 204/1002 may be configured to provide power to the circulation system 1032. The plurality of PV cells 204/1002 may be configured to provide power to the robot 1026.

The device 200/1100 includes a housing 214 configured to attach to a perimeter 254 of the pool 250. The housing 214 may be positioned such that the opening 216 may be near the surface of the water 252 of the pool 250. The housing 214 may be coupled to the sheet 202/1054 at a first end thereof. The housing may be positioned such that the sheet 202/1054 extending from the opening 216 rests on the water 252 of the pool 250 in an open configuration of the sheet 102. The sheet 202/1054 may be waterproof. The sheet 202/1054 may be hydrophobic. The sheet 202/1054 may be shaped to accommodate the shape of the pool 250. For example, the sheet 202/1054 may have cut-out portions such that in an open configuration, the sheet 202/1054 would be placed around a ladder (wherein the ladder may include the two ladder rails 256a and 256b).

The device 200/1100 may include a plurality of PV cells 204/1002, wherein the plurality of PV cells 204/1002 may include a first plurality of PV cells 218/1004 and a second plurality of PV cells 220/1006. The first plurality of PV cells 218/1004 may be positioned on the sheet 202/1054 such that in an open configuration of the sheet 202/1054, the first plurality of PV cells 218/1004 are exposed to sunlight. The second plurality of PV cells 220/1006 may be on an opposite side of the sheet 202/1054 as the first plurality of PV cells 218/1004. The first plurality of PV cells 218/1004 may be positioned along an entirety (or almost entirely, such as 80%, 90%, 95%, etc.) of the sheet 202/1054. The second plurality of PV cells 220/1006 may be located only on a portion 212 of the sheet 202/1054.

The portion 212 may include a ridge. The portion 212 may be located near or at a second end of the sheet 202/1054. The second end of the sheet 202/1054 may be on an opposing side of the first end of the sheet 202/1054. The second end of the sheet 202/1054 may be on an edge of the sheet 202/1054. The second end of the sheet 202 may be located at at least a portion of the perimeter of the sheet 202/1054. The second end of the sheet 202/1054 may be adjacent to the first end of the sheet 202/1054. The portion 212 may include the first plurality of PV cells 218/1004.

The portion 212 may include the second plurality of PV cells 220/1006. For example, the portion 212 may include the first plurality of PV cells 218/1004 positioned on a first surface (or side) of the portion 212, and the second plurality of PV cells 220/1006 positioned on the opposing surface (or side) thereof. The portion 212 may be located on the sheet 202/1054 such that, at a closed configuration of the sheet 202/1054, the one or more PV cells located on the portion 212 may be exposed to sunlight. The portion 212 may be configured to fold over the housing 214, thereby exposing the second plurality of PV cells 220/1006.

The portion 212 and/or the sheet 202/1054 may include one or more bifacial PV cells. One or more of the plurality of PV cells 204/1002 may be bifacial PV cells. The one or more bifacial PV cells may be configured to receive sunlight from underneath the sheet 202/1054. The one or more bifacial PV cells may be configured to receive sunlight reflecting inside the pool 250.

The device sheet 202/1054 may include an inflatable portion 222. The inflatable portion 222 may be configured to inflate and/or deflate. The inflatable portion 222 may include a plurality of air pockets or chambers in the sheet 202/1054. The one or more air pockets may be located between two or more layers of the sheet 202/1054. The inflatable portion 222 may be located at at least a portion of a perimeter of the sheet 202/1054. The inflatable portion 222 may be located between two or more of the plurality of PV cells 204/1002. The inflatable portion 222 may be located under the plurality of PV cells 204/1002.

One or more air pockets of the inflatable portion 222 may extend along a length of the sheet 202/1054 and/or along a width of the sheet 202/1054. One or more air pockets of the inflatable portion 222 may extend between corners of two or more PV cells. The one or more air pockets may be inflated when the sheet 202/1054 is outside of the housing 214. The one or more air pockets may be inflated when the sheet 202/1054 is at an unwound or unfolded state. The one or more air pockets at one section of the sheet 202/1054, may be at an unwound or unfolded state, may be inflated, while one or more air pockets at a second section of the sheet 202/1054, which may be at a wound or folded state, may be deflated (or without air).

The one or more air pockets may be configured to float the sheet 202/1054 on top of the swimming pool 250 in an open configuration of the sheet 202/1054. The one or more air pockets may be configured to deflate when the sheet 202/1054 is actuated from an open configuration to a closed configuration.

The one or more air pockets at a first section of the sheet 202/1054, which may be at a wound or folded state, may be inflated, while one or more air pockets at a second section of the sheet 202/1054, which may be at a wound or folded state, may be deflated (or without air). For example, for a pool cover that may fold before entering the housing 214, where the pool may be uncovered yet the sheet 202/1054 may be not entirely in the housing 214 (or, when there is no housing 214, then the sheet 202/1054 may be not entirely wound around the rotatable shaft 1044), then the folded section of the pool cover may have one or more inflated portions 222, which may prevent the sheet 202/1054 from sinking into the water. The one or more air pockets may be inflated with a fluid that is not air, such as carbon dioxide or nitrogen.

The one or more air pockets may form one or more channels, such as, for example, channels 258a/258b/258c/258d (collectively referred to herein as channels 258). The one or more channels 258 may be conduits formed by one or more pockets located between two or more layers of the sheet 202/1054. The one or more channels 258 may be located on an area of the sheet 202/1054 without one or more of the plurality of PV cells. The one or more channels 258 may be located between two or more of the plurality of PV cells. The one or more channels 258 may be located under one or more of the plurality of PV cells. The one or more channels 258 may extend between a plurality of the PV cells. The one or more channels 258 may be of any suitable shape, e.g. straight, T-shaped, zig-zag, and the like. The one or more channels 258 may be located on at least a portion of the perimeter of the sheet 202/1054.

The one or more channels 258 may be positioned between one or more of the PV cells and one or more edges of the sheet 202/1054. The one or more channels 258 may cross one another. The one or more channels 258 may extend along an entire length of the sheet 202/1054. At least one of the channels 258 may extend along at least a portion of the sheet 202/1054 such that at least a portion of the channel is covered by one or more PV cells and at least a portion of the channel is not covered by a PV cell. The one or more channels 258 may be formed between two or more of the layers of the sheet 202/1054.

The one or more channels 258 may be configured to trap a fluid or other suitable material in the sheet 202/1054, such as, for example, air. The fluid (e.g. air) may be configured to float the sheet 202/1054 on the water of the pool. The one or more channels 258 may be inflatable and/or deflatable using an inflation device 1042, such as described in greater detail elsewhere herein. The one or more channels 258 may be configured to expand when air (or fluid) is pushed into the one or more channels 258. The one or more channels 258 may be flexible or semi-flexible.

The one or more channels 258 may be configured to contain water therein. The one or more channels 258 may be configured to contain pool water (or in other words, water that originates in the pool or water that is going to be placed in the pool). The one or more channels 258 may be in fluid communication with a pool filter 1034. The one or more channels 258 may be configured to receive water from and/or transfer water to a filter, such as the pool filter 1034. The one or more channels 258 may be configured to receive water from and/or transfer water to a heater 1030 or a chiller 1036. The one or more channels 258 may be in fluid communication with the water in the pool via an opening. The one or more channels 258 may be in fluid communication with the water in the pool via one or more of a pipe or a duct. The pipe or duct may reach the bottom of the pool. The pipe or duct may be configured to reach a specific depth within the pool. Water from the pool may be transferred into the one or more channels 258 through the pipe or duct. The water from the pipe or duct may flow into the sheet 202/1054 via the one or more channels 258.

The water may flow form the one or more channels 258 to the pool filter 1034. Thus, water may be transferred from the pool, through the sheet 202/1054, and into the pool filter 1034. The pool filter 1034 may be connected to the pump 1028 and/or a pressure gauge configured to pump water into the pool filter 1034 through the sheet 202/1054. The pump 1028 and/or pressure gauge may be in communication with the controller 110/1010. The controller 110/1010 may be configured to operate the pump 1028 based on, at least in part, one or more measurements of the one or more sensors 1008, such as described in greater detail elsewhere herein. For example, the controller 110/1010 may receive one or more measurements indicative of a need to filter the pool water. For example, the controller 110/1010 may receive one or more measurements indicative of a high level of one or more chemicals and/or particles in the water of the pool. The controller 110/1010 may command and operate the pump 1028 (e.g. via the generation and/or transmission of one or more control signals) such that water is filtered through the pool filter 1034.

Water from the pool filter 1034 may be transferred back into the pool via an opening or pipe. Water from the pool filter 1034 may be transferred back into the pool via one or more of the one or more channels 258. At least a portion of the channels 258 may be configured to transfer water towards the pool filter 1034. At least a portion of the channels 258 may be configured to transfer water away from the pool filter 1034.

The water may flow from the one or more channels 258 to the heater/chiller 1030/1036. The heater 1030 may be configured to heat the water of the pool. The chiller 1036 may be configured to cool the water of the pool. The heater 1030 and chiller 1036 may be the same or different devices. Thus, water may be transferred from the pool, through the sheet 202/1054, and into the heater/chiller 1030/1036. The pool filter 1034 may be connected to the pump 1028 and/or pressure gauge configured to pump water into the heater/chiller 1030/1036 through the sheet 202/1054. The pump 1028 and/or pressure gauge may be in communication with the controller 110/1010. The controller 110/1010 may receive one or more measurements indicative of a need to change the temperature of the pool. For example, the controller 110/1010 may receive one or more measurements indicative of a high water temperature in the pool. The controller 110/1010 may command and operate the pump 1028 such that water is pumped into the chiller, thereby cooling the water of the pool.

For example, the controller 110/1010 may be configured to prevent chlorine burn of the chlorine in the pool by operating the pump 1028 such that water is maintained below a certain temperature, and wherein the certain temperature is associated with a lower rate of chlorine break down in the pool water. Thus, the controller 110/1010 may prevent the need to add more chlorine into the pool due to a rise in the water temperature. Water from the heater/chiller 1030/1036 may be transferred back into the pool via an opening or pipe. Water from the heater/chiller 1030/1036 may be transferred back into the pool via one or more of the one or more channels 258. At least a portion of the channels 258 may be configured to transfer water towards the heater/chiller 1030/1036. At least a portion of the channels 258 may be configured to transfer water away from the heater/chiller 1030/1036.

Thus, the sheet 202/1054 may be used to maintain a temperature of the pool water. The sheet 202/1054 may be configured to heat or cool the pool water. The sheet 202/1054 may be used to transfer heat from the PV cells.

Water located in the sheet 202/1054 and/or the one or more channels 258 may be placed back into the pool without passing though the heater/chiller 1030/1036. Water located in the sheet 202/1054 and/or the one or more channels 258 may be placed back into the pool without passing through the pool filter 1034. Water located in the sheet 202/1054 and/or the one or more channels 258 may be placed back into the pool via an opening or a pipe.

Thus, the sheet 202/1054 may be used as a passive heater or cooler, wherein the temperature of the water of the pool may be lowered or raised by passing water through the one or more channels 258 (and without using a heater/chiller 1030/1036). For example, passing pool water through the one or more channels 258 may be used to transfer heat from the PV cells to the pool water, thereby maintaining the pool water at a temperature higher than ambient temperature without a heater. The passive heater or cooler may be monitored using the one or more sensors 1008 and the controller 110/1010. The passive heater or cooler may be used in combination with the heater/chiller 1030/1036 once a threshold temperature is crossed, thereby enabling energy conservation by operating the heater/chiller 1030/1036 only passed a threshold temperature.

The one or more channels 258 may include one or more pool water channels configured to transfer water from/to the pool, one or more fluid channels configured to maintain the sheet afloat, or any combination thereof. The one or more channels 258 may be between a first layer and a second layer of the sheet 202/1054. The one or more channels 258 may be between a second layer and a third layer of the sheet 202/1054. The one or more channels 258 may include a combination of channels between a first layer and a second layer of the sheet 202/1054 and channels between a second layer and a third layer of the sheet 202/1054. For example, the pool water channels may be between a first layer and a second layer of the sheet 202/1054, and the fluid channels may be between a third and fourth (or second and third) layers of the sheet 202/1054.

The one or more channels 258 may be integrated with the circulation system 1032 of the pool. The one or more channels 258 may be in fluid communication with the circulation system 1032 of the pool. The circulation system may be in communication with the controller 110/1010. The sheet 202 may be configured to connect to an already existing circulation system of the pool. The one or more channels 258 may be configured to circulate water using the circulation system 1032. The circulation system 1032 and/or the pool subsystem 1024 may be controlled (e.g. wirelessly and/or via a wired connection) via the controller 1010 and/or the user interface 1052. The circulations subsystem 1032 and/or the pool subsystem 1024 may be programmable. The circulations subsystem 1032 and/or the pool subsystem 1024 may have programmable cycles, such as, for example, programmable filter cycles.

The pool subsystem 1024 may include a robot 1026, such as a cleaning robot. The robot 1026 may include a docking station. The robot 1026 and/or the docking station may be in communication with the controller 1010 and/or the user interface 1052. The robot 1026 and/or the docking station may be powered by the plurality of PV cells, or in other words, may be a load of the plurality of PV cells. The robot 1026 and/or the docking station may be configured to work while the sheet 102/202 is at an open configuration. The robot 1026 and/or the docking station may be configured to work while the sheet 102/202 is at a closed configuration. The controller 1010 may be programmable to prevent the robot 1026 from running into the sheet 102/202 and/or the device 100/200.

The device 200/1100 may include an inflation device 1042 configured to inflate or deflate the inflatable portion. The inflation device 1042 may be operated using power from one or more of the plurality of PV cells 204/1002. One or more of the plurality of PV cells 204/1002 may be configured to provide power to the inflation device 1042. The device 200/1100 may be part of a system 280 of a pool. The system 280 may include the controller 210 (and/or, for example, the controller 110/1010). The system 280 may include the inflation device 1042. The inflation device 1042 may be located in the housing 214. The system 280 may include one or more sensors 1008. The one or more sensors 1008 may include any one or more of temperature sensors 1012, humidity sensors, pressure sensors, optical sensors 1016, and the like. The system 280 may include a set of connectors configured to electrically couple the sheet 202/1054 to the pool filter 1034 of the pool 250.

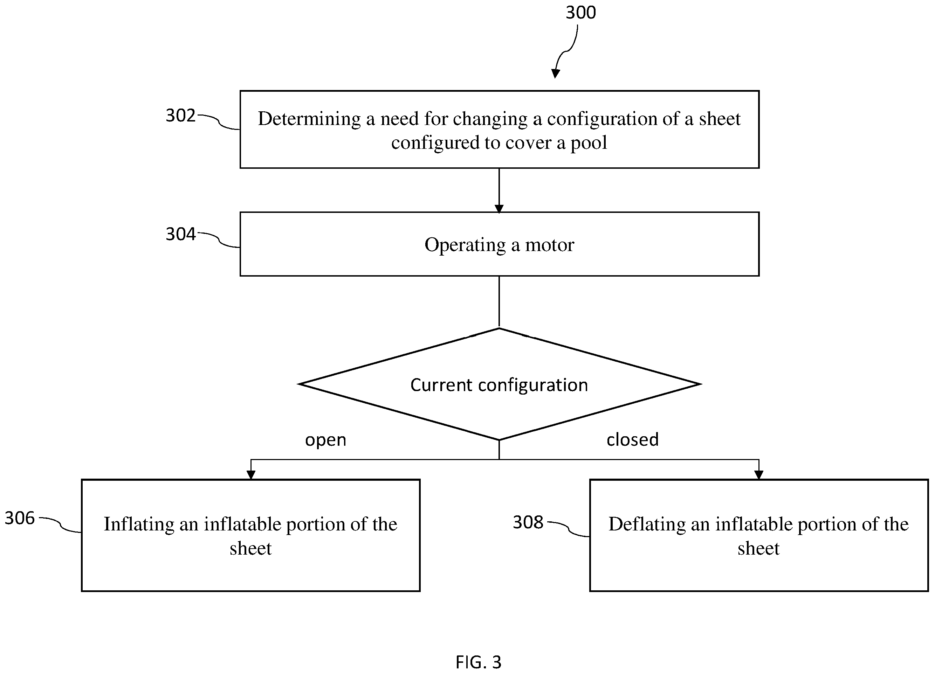

Reference is made to Figure 3, which shows an example flow chart of steps of a method for changing the configuration of a device, such as device 100 of Figure 1A and Figure 1B, and device 200 of Figure 2A and Figure 2B. The method 300 may be performed by any suitable number and/or type of components identified with the device 100, 200, e.g., the controllers 110, 1010, 210, etc.

The method 300 may include, at step 302, determining a request for changing a configuration of a sheet configured to cover a pool. The method 300 may include, at step 304, operating a motor. When the current configuration of the sheet is an open configuration, the method may include, at step 306, inflating an inflatable portion of the sheet. When the current configuration of the sheet is a closed configuration, the method may include, at step 308, deflating an inflatable portion of the sheet.

The method 300 may include, at step 302, determining a request for changing a configuration of a sheet configured to cover a pool. The method 300 may include determining a user request (manual, semiautomatic, or automatic request) for changing a configuration of a sheet configured to cover a pool using the controller 110/1010/210. The method 300 may include receiving data associated with any one or more of the weather, a weather forecast, the time of the day, the time of year, season, and the like. The method 300 may include receiving data associated with power output of one or more of the plurality of PV cells 104/204/1002. The method 300 may include receiving instructions from a user via the user interface 1052, wherein the user interface 1052 may be in communication with the controller 110/1010/210.

The method 300 may include determining the current configuration of the sheet 102/202/1054. The method 300 may include determining a configuration of the sheet 102/202/1054. A configuration of the sheet 102/202/1054 may include creating one or more folds in the sheet 102/202/1054, such as described in greater detail herein. A configuration of the sheet 102/202/1054 may include a configuration between a completely closed configuration and a completely open configuration. A completely closed configuration may be a configuration in which the sheet 102/202/1054 may be completely wound around the rotatable shaft 1044. A completely closed configuration may be a configuration in which the sheet 102/202/1054 may be completely wound around the axis of rotation, except for the portion 112/212 that may not be wound around the rotatable shaft 1044. The portion 112/212 may be exposed to sunlight in a completely closed configuration. A completely open configuration may be a configuration in which the sheet 102/202/1054 may be entirely unwound from the rotatable shaft 1044.

The method 300 may include determining a configuration of the sheet 102/202/1054 based upon a time of day. The method may include determining a configuration of the sheet 102/202/1054 based upon sensor data. The method 300 may include determining a configuration of the sheet 102/202/1054 based upon data indicative of a position of the sun. The method may include determining a configuration of the sheet 102/202/1054 based upon data indicative of one or more shaded areas of the sheet 102/202/1054.

The method 300 may include, at step 304, operating a motor. The method may include operating, via a controller, the motor. The method may include operating the motor 106/1040 to rotate the rotatable shaft 108/1044. The method may include rotating, via the motor 106/1040, the rotatable shaft 1044 to unwrap the sheet 102/202/1054 from the rotatable shaft 1044. The method may include rotating, via the motor, the rotatable shaft 1044 to extend the sheet 102/202/1054 outwards from the rotatable shaft. The method may include rotating, via the motor 106/1040, the rotatable shaft 1044 to pull the sheet 102/202/1054 towards from the rotatable shaft. The method may include rotating, via the motor 106/1040, a rotatable shaft 1044 to wrap the sheet 102/202/1054 around the rotatable shaft.

The method 300 may include assessing, at step 305, the current configuration of the sheet 102/202/1054. The method 300 may include assessing the current configuration of the sheet 102/202/1054 after operation of the motor. When the current configuration of the sheet is an open configuration, the method may include, at step 306, inflating an inflatable portion of the sheet. The method 300 may include inflating, via an inflation device 1042, the inflatable portion 222 of the sheet 102/202/1054, thereby enabling floatation of the sheet 102/202/1054 on water of the pool. The method 300 may include inflating, via the inflation device 1042, at least a portion of the inflatable portion 222. The method 300 may include inflating, via the inflation device 1042, one or more air pockets of the inflatable portion 222. The method 300 may include determining which one or more air pockets of the inflatable portion 222 may be inflated. The method 300 may include determining which one or more air pockets of the inflatable portion 222 may be inflated by determining which portions of the sheet 102/202/1054 may be floated on the pool.

When the current configuration of the sheet 102/202/1054 is a closed configuration, the method 300 may include, at step 308, deflating an inflatable portion of the sheet 102/202/1054. The method 300 may include deflating, via an inflation device 1042, the inflatable portion 222 of the sheet 102/202/1054, thereby enabling wrapping (or winding) the sheet 102/202/1054 without trapping air therein. The method 300 may include deflating, via the inflation device 1042, one or more air pockets of the inflatable portion 222. The method 300 may include determining which one or more air pockets of the inflatable portion 222 may be deflated. The method 300 may include determining which one or more air pockets of the inflatable portion 222 may be deflated by determining which portions of the sheet 102/202/1054 may be wound on the rotatable shaft 1044.

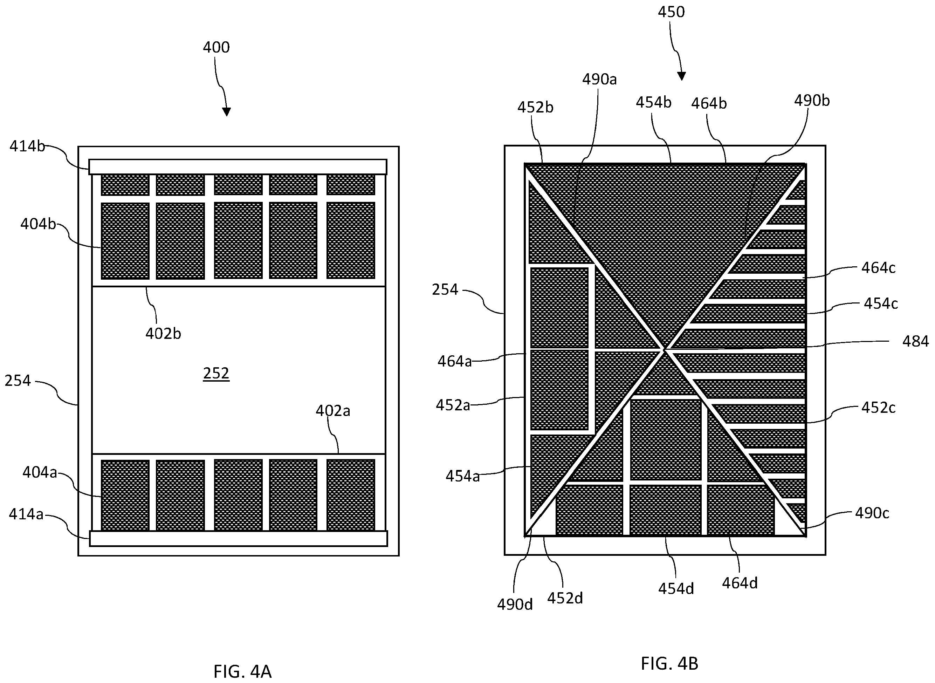

Reference is made to Figure 4A, which shows a perspective view schematic illustration of an example pool cover in an open configuration, and to Figure 4B, which shows a perspective view schematic illustration of an example pool cover in an open configuration.

The pool cover 400 depicted in Figure 4A and the pool cover 450 depicted in Figure 4B may include one or more aspects of the device 100 of Figure 1A and Figure 1B and/or the device 200 of Figure 2A and Figure 2B as described herein. The reference numbers of Figure 4A and Figure 4B may correspond to reference numbers of Figure 1A, Figure 1B, Figure 1C, Figure 2A, and Figure 2B (for example, the plurality of PV cells 1002, 104, 204 and the plurality of PV cells 404 and 454, the sheet 102, 202 and the sheet 402 and 452, etc.) in order to transfer properties and features which may be common. The plurality of PV cells 404/454 may have one or more of the same characteristics as the plurality of PV cells 104/204. The pool cover 400 may be incorporated in the system 1000, in addition to, or in place of device 100. The pool cover 450 may be incorporated as a device in the system 1000, in addition to, or in place of device 100.

The system, such as system 280, and/or the device 400/450/1100 may include a plurality of sheets 402a/402b/452a/452b/452c/452d (collectively referred to herein as plurality of sheets 402/452). The plurality of sheets 402/452 may be configured to attach to a wall of the pool perimeter 254. The plurality of sheets 402/452 may be configured to attach to a wall of the pool perimeter 254 via one or more housings 414a/414b. The plurality of sheets 402/452 may be configured to attach to a wall of the pool perimeter 254 via one or more attachment components 464a/464b/464c/464d. Each of the plurality of sheets 402/452 may form part of an individual pool cover, which may be respectively attached to any suitable component, such as the wall of the pool perimeter 254, for instance, via one or more respective attachment components 464a/464b/464c/464d.

The plurality of sheets 402/452/1054 may include a first sheet 402a/452a. The plurality of sheets 402/452 may include a second sheet 402b/452d. The first sheet 402a/452a and/or the second sheet 402b/452d may be configured to attach to a wall of the pool perimeter 254.

The plurality of sheets 402/452/1054 may each include a plurality of PV cells 404a/404b/454a/454b/454c/454d/1002 (collectively referred to herein as plurality of PV cells 404/454/1002). The plurality of PV cells 404a/404b may include a first plurality of PV cells and a second plurality of PV cells, such as described in greater detail herein. The plurality of PV cells 404a/404b may be disposed on a first portion of each of the plurality of PV cells 404/454 such that, in the open configuration, the first plurality of PV cells are exposed to the sun. The plurality of PV cells 404a/404b may be disposed on a second portion of each of the plurality of PV cells 404/454/1002 such that, in the closed configuration, the second plurality of PV cells are exposed to the sun.

The housings 414a/414b and/or the attachment components 464a/464b/464c/464d (collectively referred to herein as the housings 414 and the attachment components 464, respectively), may be positioned at one or more ends of the pool perimeter 254. The housings 414 and/or the attachment components 464 may be positioned at different sides or different portions of a perimeter 254 of the pool. The housings 414 and/or the attachment components 464 may be attached to opposite edges of the pool perimeter wall. The housings 414 and/or the attachment components 464 may be attached to adjacent edges of the pool perimeter wall. For a pool comprising a curved or arced perimeter, the housings 414 and/or the attachment components 464 may be attached to one or more arched edges of the pool perimeter 254.

As shown in Figure 4A, the housings 414a and 414b may be positioned on opposing sides of the pool perimeter 254. The housings 414a and 414b may be positioned such that the sheets 402a/402b extend from the housings 414a/414b and towards each other. The sheets 402a/402b, at an open configuration thereof, may be configured to attach to each other. The sheets 402a/402b may be configured to attach at different configurations. For example, a first sheet 402a may be configured to cover a third of the pool at an open configuration thereof, and a second sheet 402b may be configured to cover two thirds of the pool. The sheets 402a/402b may be configured to cover different portions of the pool such that the pool may be completely or partially covered. The controller 110/1010/210 may be configured to determine the amount of coverage each sheet 402a/402b provides. For example, when one of the sheets 402a/402b outputs less power than the second sheet 402b, then the controller 110/1010/210 may determine that the second sheet 402b covers a larger portion of the pool than the first sheet 402a.

As shown in Figure 4B, the pool cover 450 may include a first sheet 452a and a second sheet 452b. The first sheet 452a and the second sheet 452b may be positioned on adjacent edges of the pool. The pool cover 450 may include a third sheet 452c. The pool cover 450 may include a fourth sheet 452d. The plurality of sheets 452 may be configured to meet at a point 484. Two or more sheets 452 of the plurality of sheets 452 may be configured to attach to each other at the point 484 or at one or more common edges 490a/490b/490c/490d. The one or more common edges 490a/490b/490c/490d may be the formed at the edge of two sheets 452 where the two sheets 542 meet. For example, the edge 490c may be formed when sheets 452c and 452d reach each other.

The device 400/540/1100 may include a housing 414 or attachment component 464 for a plurality of sheets. For example, a housing 414 may be positioned in the middle of the pool 525, such that two sheets extend therefrom. Each sheet 1054 may extend from a different side of the housing, thereby enabling coverage of the entire pool.

The pool cover 100/200/400/500 may be connected to a shading device. The shading device may include an awning. The shading device may include a plurality of PV cells or PV panels, which may be positioned above the pool to provide at least partial shading to the pool area. The one or more PV cells or PV panels may be vertically hung onto a cable or wire. The one or more PV cells or PV panels may be part of a sheet configured to rotate or extend from a closed configuration to an open configuration (or vice versa).

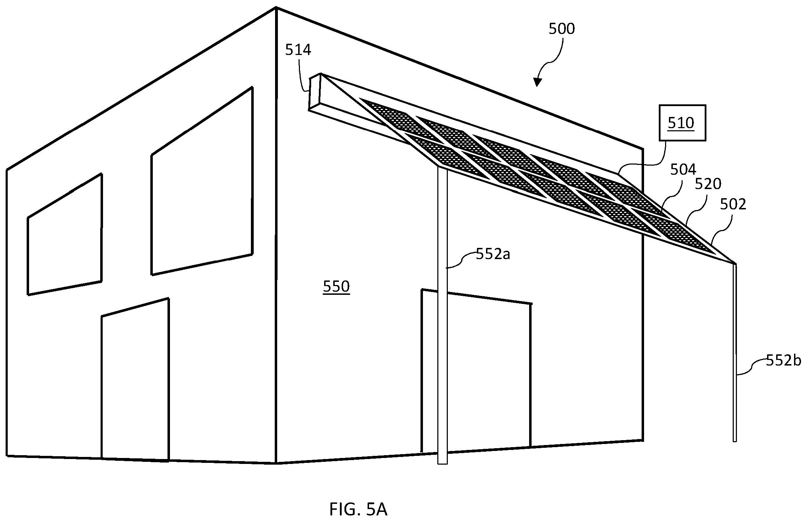

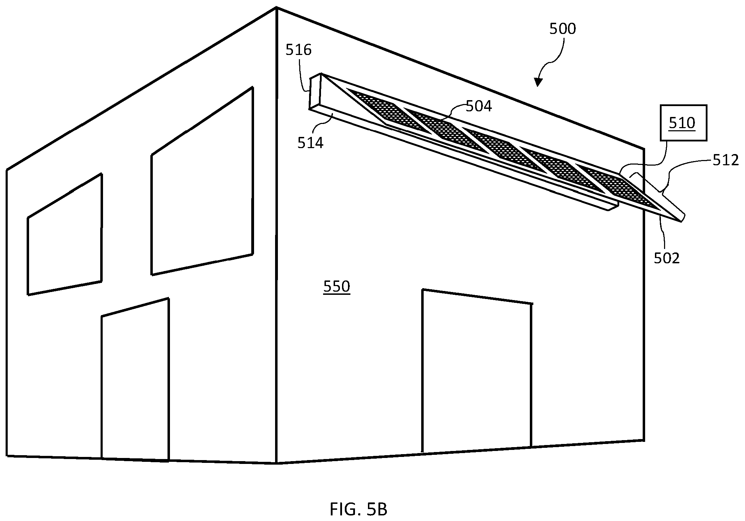

Reference is made to Figure 5A and Figure 5B, which show perspective view schematic illustrations of an example awning cover in an open configuration and a closed configuration, respectively.

The device 500 depicted in Figure 5A and Figure 5B may include one or more aspects of the device 100 of Figure 1A and Figure 1B as described herein and/or the system 1000 of Figure 1C as described herein . The device 500 depicted in Figure 5A and Figure 5B may include one or more aspects of the devices 200/400/450 of Figure 2A, Figure 2B, Figure 4A, and Figure 4B, respectively, as described herein. The reference numbers of Figure 5A and Figure 5B may correspond to reference numbers of Figure 1A, Figure 1B, Figure 1C, Figure 2A, Figure 2B, Figure 4A, and Figure 4B (for example, the plurality of PV cells 104 and 504, the sheet 102 and 202, etc.) in order to transfer properties and features which may be common. For example, the plurality of PV cells 504 may have one or more of the same characteristics as the plurality of PV cells 104. The device 500 may be incorporated in the system 1000, in addition to, or in place of device 100.

The device 500/1100 may be configured to shelter at least part of a balcony. The device 500/1100 may be configured to shade a portion of land, such as a yard. The device 500/1100 may be an awning. The device 500/1100 may include a rail 520/1038. The device 500 and/or the rail 520/1038 may include an attachment component 516 configured to attach to a building 550. The device 500/1100 may include a sheet 502/1054 configured to extend away from and/or towards the rail 520/1038 and/or the attachment component 516. The sheet 502/1054 may include a plurality of PV cells 504/1002. The sheet 502/1054 may be coupled to the attachment component 516. The sheet 502/1054 may be configured to move along the rail 520/1038. The device 500/1100 may include a motor configured to control a movement of the sheet 502/1054. The device 500/1100 may include a controller 510/1010 configured to control an operation of the motor. In an open configuration, the sheet 502/1054 may extend away from the attachment component 516. In a closed configuration, the sheet 502/1054 may be partially folded. In a closed configuration, the sheet 502/1054 may be partially rolled. The sheet 502/1054 may include a portion 512 configured to expose one of the plurality of PV cells 504/1002 when the sheet 502/1054 is in the closed configuration.

The sheet 502/1054 may be a cover, such as a pool cover or an awning. The sheet 502/1054 may be flexible. The sheet 502/1054 may be made from a polymer and/or a fabric. The sheet 502/1054 may be shaped to cover a specific object, such as, for example, a pool or a yard. The shape of the sheet 502/1054 may be predetermined or preordered by a user based on the shape of the object which the sheet 502/1054 is intended to cover. The sheet 502/1054 may include a single layer of material, wherein the plurality of PV cells 504/1002 may be positioned onto the sheet 502/1054. The sheet 502/1054 may include a plurality of layers of materials, wherein one or more electrically conductive elements associated with the plurality of PV cells 504/1002 may be positioned between two layers of the sheet 502/1054. The sheet 502/1054 may include a plurality of layers of materials, wherein one or more non-electrically conductive elements associated with the plurality of PV cells 504/1002 may be positioned between two layers of the sheet 102. For example, the rail 520/1038 may be positioned between two layers of the sheet 502/1054. For example, the non-electrically conductive element may include a clamp or button configured to fix the position of one or more of the plurality of PV cells 504/1002. The plurality of layers may be of the same or different materials.

The sheet 502/1054 may have a first end configured to be coupled to the attachment component 516. The first end may include a portion of the perimeter of the sheet 502/1054. The first end may include a portion of a surface of the sheet 502/1054. The sheet 502/1054 may be configured to wrap around the rotatable shaft 1044 within the attachment component 516. The sheet 502/1054 may be configured to wrap around the rotatable shaft 1044 during (or due to) a rotation of the rotatable shaft 1044.

The sheet 502/1054 may be coupled to the rail 520/1038 at a second end of the sheet 502/1054. The second end of the sheet 502/1054 may be adjacent to the first end of the sheet 502/1054. For example, the first end of the sheet 502 may be a first edge of the perimeter of the sheet 502/1054, and the second end of the sheet 502/1054 may be an adjacent edge of the perimeter of the sheet 502/1054. For example, in a rectangular or square sheet, the first end and the second end of the sheet 502/1054 may be edges that form a 90 degree angle with respect to each other.

The sheet 502/1054 may include a plurality of PV cells 504/1002. The plurality of PV cells 504/1002 may be positioned on the sheet 502/1054. The plurality of PV cells 504/1002 may be located on a first surface of the sheet 502/1054, wherein in the open configuration, the first surface of the sheet 502/1054 may be exposed to sunlight. A second surface of the sheet 502/1054 may be opposing the first surface, such that in the open configuration the second surface of the sheet 502/1054 may be facing the ground. In an open configuration, the second surface of the sheet 502/1054 may be positioned towards the ground, or in other words, facing "down," or away from the sun.

The plurality of PV cells 504/1002 may be positioned on a first layer of the sheet 502/1054. The second layer of the sheet 502 may include a plurality of openings configured to expose the plurality of PV cells 504/1002 positioned on the first layer of the sheet 502/1054. The second layer of the sheet 502/1054 may be at least partially translucent, thereby exposing the plurality of PV cells 504/1002. Advantageously, a translucent second layer of the sheet 502/1054 may enable exposure of the plurality of PV cells 504/1002 to sunlight without requiring a plurality of openings in the second layer of the sheet 502/1054.

The sheet 502/1054 may include a plurality of PV cells woven or otherwise integrated into the sheet 502/1054. The sheet 502/1054 may be a power generating sheet. One or more layers of the sheet 502/1054 may include a power generating fabric. The power generating fabric may include a fabric composed of a plurality of PV cells. For example, the power generating fabric may be printed using a 3D printer.

The plurality of PV cells 504/1002 may include a plurality of PV cells. The plurality of PV cells 504/1002 may be configured to provide a direct current (DC) voltage not exceeding 30 volts or any suitable threshold voltage. For example, the plurality of PV cells 504/1002 may be configured to provide a direct current (DC) voltage not exceeding 50 volts, not exceeding 25 volts, etc. The sheet 502/1054 may be configured to generate a voltage having any suitable range, e.g., between 5 to 30 volts, or in other words, the plurality of PV cells on the sheet 502 may be configured to generate between 5 to 30 volts. For example, the sheet 502/1054 may be configured to generate between 5 to 30 volts, between 15 to 25 volts, between 3 to 18 volts, between 3 to 30 volts, etc.

The plurality of PV cells 504/1002 may be flexible cells (for example chemical vapor deposition of silicon on a flexible substrate), thin-film cell (for example Copper Indium Gallium Diselenide (CIGS) cells), perovskite cells, silicon cells (poly- or mono-crystalline cells), or rigid silicon cells. The plurality of PV cells 504 may include a flexible substrate. The plurality of PV cells 504/1002 may be adhered onto the sheet 502/1054. The plurality of PV cells may be flush with the sheet 502/1054. The plurality of PV cells 504 may cover a majority of the sheet 502/1054. The plurality of PV cells 504 may be configured to conform with the shape of the sheet 502/1054. The plurality of PV cells 504 may be configured to conform with the shape of the sheet 502/1054 in a closed configuration of the device, or in other words, when the sheet 502/1054 may be folded. The plurality of PV cells 504 may be configured to conform with the shape of the sheet 502/1054 in a closed configuration of the device, or in other words, when the sheet 502/1054 may be wrapped around the rotatable shaft 1044.

The portion 512 may include a ridge. The portion 512 may be located near a third end of the sheet 502. The third end of the sheet 502/1054 may be opposing the first end of the sheet 502/1054. The third end of the sheet 502/1054 may be on an edge of the sheet 502/1054. The third end of the sheet 502/1054 may be located at at least a portion of the perimeter of the sheet 502/1054. The third end of the sheet 502/1054 may be adjacent to the second end of the sheet 502/1054. The portion 512 may include one or more of the plurality of PV cells 504/1002. The portion 512 may be located on the sheet 502/1054 such that, in a closed configuration of the sheet 502/1054, the one or more PV cells located on the portion 512 may be exposed to sunlight. The portion 512 may be made of the same material as the rest of the sheet 502/1054. The portion 512 may be more rigid than the rest of the sheet 502/1054. The portion 512 may be configured to fold over the attachment component 516.

The attachment component 516 may be configured to attach to a portion of a wall of the building 550. The attachment component 516 may be part of a housing 514. The housing 514 may include the attachment component 516. The attachment component 516 may include anchors, clamps, or the like. The attachment component 516 may be removable, such as, for example, with a zipper or Velcro. The device 500/1100 may include the housing 514. The housing 514 may include a box configured to contain any one or more of the motor, the actuator 1046, and/or a portion of the rail 520/1038. The housing 514 may be configured to house the sheet 502/1054. The housing 514 may be configured to house at least a portion of the sheet 502/1054 in a closed configuration thereof. The housing 514 may be configured to house the controller 510/1010.

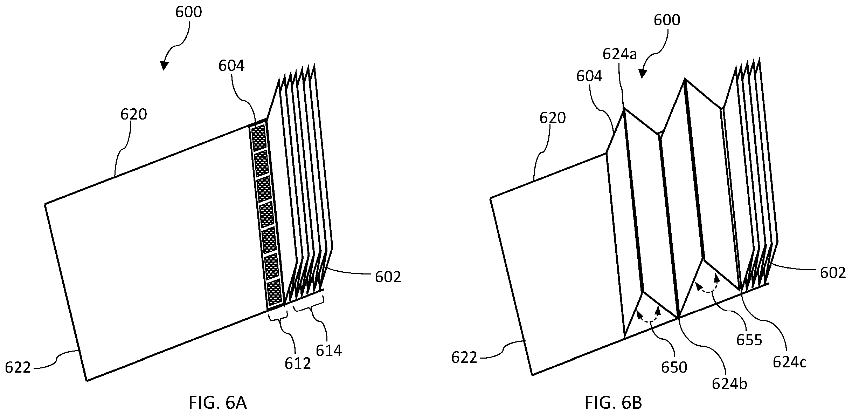

In the closed configuration, the sheet 502/1054 may be folded in the housing 514. In the closed configuration, the sheet 502/1054 may be rolled in the housing 514. For example, as depicted in Figure 5B, in the closed configuration the sheet 502/1054 may be rolled in the housing 514. As depicted in Figure 6A and Figure 6B, the sheet 502/1054 may be folded towards the housing 514 and/or within the housing 514. The sheet 502/1054 may be folded like an accordion, or in other words, the sheet 502/1054 may be accordion folded. The sheet 502/1054 may be folded in a half fold, in which the sheet 502/1054 may be folded once around the middle of the sheet 502/1054. The sheet 502/1054 may be folded in a Z-fold, in which the sheet 502/1054 may be folded in alternating directions into two or more parts. The Z-fold may include a plurality of fold lines in which the sheet 502/1054 may be folded.

The device may include a frame. The frame may include the rail 520/1038. The rail 520 may be connected to the sheet 502/1054 such that movement of the rail 520/1038 causes movement of the sheet 502/1054. The rail 520/1038 may be connected to the sheet 502/1054 such that the sheet 502/1054 moves with respect to the rail 520/1038. The rail 520/1038 may be configured to move within the frame, the frame may be a collapsible frame. The rail 520/1038 may include an extendable rod or arm. The rail 520/1038 may include a telescopically-extendable rod or arm, where the arm comprises a joint. The sheet 502/1054 may be configured to slide along the rail 520/1038. The sheet 502/1054 may be configured to stay fixed with respect to the rail 520/1038, and move with respect to the attachment component 516 when the rail 520/1038 moves with respect to the attachment component 516.

The device 500/1100 may include a motor (such as, for example, motor 1040) configured to operate the movement of the rail 520/1038 and/or the sheet 502/1054. The rail 520/1038 may be extended and/or contracted (e.g. retracted) using the motor 1040. The motor 1040 may be configured to operate the actuator 1046. The rail 520/1038 may be extended and/or contracted using the actuator 1046. The motor 1040 may be configured to switch the sheet 502/1054 from the open configuration to the closed configuration. The motor 1040 may be configured to switch the sheet 502/1054 from the closed configuration to the open configuration. The actuator 1046 may be a device configured to provide linear motion to the rail 520/1038. The actuator 1046 may include a piston and/or a rod that may be pushed in a linear manner when voltage is applied. The actuator 1046 and/or the motor 1040 may operate using power produced in one or more of the plurality of PV cells 504/1002. The actuator 1046 and/or the motor 1040 may operate using power produced in one or more of the plurality of PV cells 504/1002 in the exposed portion 512 of the sheet 502/1054, in a closed configuration of the sheet 502/1054. The controller 510/1010 may be in communication with the motor 1040. The controller 510/1010 may be configured to cause the rail 520/1038 to extend or contract.

The controller 510/1010 may be connected to the motor 1040 via a cable or wired connection. The controller 510/1010 may be connected to the motor 1040 via a wireless connection. The controller 510/1010 may comprise a communication module 1020 and/or a cellular interface 1022. The communication module 1020 or the cellular interface 1022 may be configured to communicate with the user interface 1052. The communication module 1020 or the cellular interface 1022 may be configured to communicate with the motor 1040. The cellular interface 1022 may comprise at least one of a subscriber identity module (SIM) card or internet card. The communication module 1020 may comprise wired or wireless communication protocols (e.g., one or more protocols of power line communication, Ethernet, Bluetooth^{™}, Wi-Fi, ZigBee^{™}, and/or a cellular network).

The device 500/1100 may include one or more sensors 1008, such as, for example, temperature sensors 1012, humidity sensors, pressure sensors, optical sensors 1016, and the like. The controller 510/1010 may be configured to change the configuration of the sheet 502/1054 based on data received from the one or more sensors 1008. The controller 510/1010 may be configured to determine a configuration for the sheet 502/1054 based on data received from the one or more sensors 1008. The configuration of the sheet 502/1054 may include the number of folds in the sheet 502/1054. The configuration of the sheet 502/1054 may include the one or more angles of one or more folds of the sheet 502/1054. The controller 510/1010 may be configured to control one or more angles of one or more folds of the sheet 502/1054, such as described in greater detail herein. The controller 510/1010 may be configured to determine a configuration for the sheet 502/1054 based on the time of day, year, month, season, and/or the like. The controller 510/1010 may be configured to receive (or collect) weather information using the Internet or any suitable data communications (for example, using the communication module 1020). The controller 510/1010 may be configured to search and/or receive data associated with the current weather and/or a weather forecast. The controller 510/1010 may be configured to determine a configuration for the sheet 502/1054 based on the weather or the weather forecast. The controller 510/1010 may operate using power produced in one or more of the plurality of PV cells 504/1002. The controller 510/1010 may operate using power produced in one or more of the plurality of PV cells 504/1002 in the exposed portion 512 of the sheet 502/1054, in a closed configuration of the sheet 502/1054.

The sheet 502/1054 may have more than one open configuration and/or more than one closed configuration. For example, one open configuration may include three folds wherein the angle between each fold may be 60 degrees. As another example, one open configuration may include three folds wherein the angle between two of the folds may be 60 degrees and an angle between two of the folds may be 80 degrees. As yet another example, one open configuration may include five folds wherein the angle between two pairs of the folds may be 70 degrees and an angle between two of the folds may be 80 degrees.

In the open configuration, such as depicted in Figure 5A, the sheet 502/1054 may extend away from the housing 514. In the open configuration, the plurality of PV cells 504/1002 may extend away from the housing 514. In the open configuration, the sheet 502/1054 may be completely unwound or unfolded. In the open configuration, the sheet 502/1054 may be at least partially folded, or in other words, the sheet 502/1054 may have one or more folds.

In the closed configuration, such as described in Figure 5B, the sheet 502/1054 may be wound within the housing 514. In the closed configuration, the plurality of PV cells 504/1002 may be rolled or folded within the housing 514. In the closed configuration, the sheet 502/1054 may be at least partially folded. In the closed configuration, the sheet 502/1054 may be completely folded. In the closed configuration, the sheet 502 may be completely folded, except for the portion 512. In the closed configuration, at least a portion 512 of the sheet 502/1054 may be exposed.

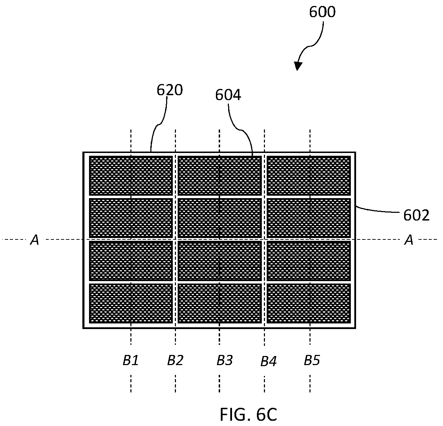

Reference is made to Figure 6A, Figure 6B, and Figure 6C, which show perspective view schematic illustrations of exemplary folding sheets. The device 600 depicted in Figure 6A, Figure 6B, and Figure 6C may include one or more aspects of the device 100 of Figure 1A and Figure 1B, the system 1000 of Figure 1C, the device 200 depicted in Figure 2A and Figure 2B, the device 400/450 depicted in Figure 4A and Figure 4B, and/or the device 500 depicted in Figure 5A and Figure 5B, as described herein. The reference numbers of Figure 6A and Figure 6B may correspond to reference numbers of Figure 1A, Figure 1B, Figure 1C, Figure 2A, Figure 2B, Figure 4A, Figure 4B, Figure 5A, and Figure 5B, (for example, the plurality of PV cells 604 and 504, the sheet 602 and 502, etc.) in order to transfer properties and features which may be common. For example, the plurality of PV cells 604 may have one or more of the same characteristics as the plurality of PV cells 204. The device 600 may be incorporated in the system 1000, in addition to or in place of device 100.

The device 600 may be configured to fold. At a closed configuration, such as depicted in Figure 6A, the sheet 602/1054 may have a folded portion 614. The sheet 6602/1054 may include a portion 612 (or ridge) configured to expose one or more of the plurality of PV cells 604/1002. As depicted in Figure 6B, at an open configuration of the sheet 602/1054, the sheet 602 may be configured to fold while exposing at least a portion of the plurality of PV cells 604/1002 of the sheet 602/1054. The sheet 602/1054 may be configured to slide along a rail 620/1038. The rail 620/1038 may be a part of a frame 622.

The sheet 602/1054 may be folded into one or more folds, such as, for example, the folds 624a/624b/624c as depicted in Figure 6B. The folds 624 may form an angle therebetween, such as, for example, the angles 650 and 655. A controller (which may be similar or identical to the controller 110/210/510/1100 as described herein) may be configured to control one or more angles of the one or more folds of the sheet 602/1054. The controller may be configured to operate the motor 1040 such that one or more specific folds and/or angles are created in the sheet 602/1054. The sheet 602/1054 may have a plurality of folding axes, such as folding axes *B1*/*B2*/*B3*/*B4*/*B5.* The folding axes may be perpendicular to a longitudinal axis of the sheet 602/1054. The folding axes may be perpendicular, or essentially perpendicular, to an axis of movement A of the sheet 602/1054. The sheet 602/1054 and/or rail 620/1038 may be configured to slide along the axis of movement A.

The controller may be configured to operate the motor 1040 such that one or more specific angles are made in the folds of the sheet 602/1054. The controller may be configured to operate the motor 1040 such that a specific number of folds are made in the folds of the sheet 602. The controller may be configured to calculate and/or determine the one or more angles of the one or more folds of the sheet 602/1054 based upon a time of day. The controller may be configured to calculate and/or determine the number of folds of the sheet 602/1054 based upon a time of day.

The controller may be configured to calculate and/or determine the one or more angles of the one or more folds of the sheet 602/1054 based upon sensor data, such as, for example, data received form the one or more sensors 1008. The controller may be configured to calculate and/or determine the number of folds in the sheet 602/1054 based upon sensor data, such as, for example, data received from the one or more sensors 1008. The controller may be configured to determine the one or more angles of the one or more folds of the sheet 602/1054 based on user input data and/or user command. The controller may be configured to determine the number of folds in the sheet 602/1054 based on user input data and/or user command.

The controller may be configured to calculate and/or determine the one or more angles of the one or more folds of the sheet 602/1054 based upon data indicative of a position of the sun. The controller may be configured to calculate and/or determine the number of folds in the sheet 602/1054 based upon data indicative of a position of the sun. The controller may be configured to calculate and/or determine the one or more angles of the one or more folds of the sheet 602/1054 based on data indicative of one or more shaded areas of the sheet 602/1054. The controller may be configured to calculate and/or determine the number of folds in the sheet 602/1054 based on data indicative of one or more shaded areas of the sheet 602/1054.

The controller may be configured to determine one or more of the angles between the folds of the sheet 602/1054 such that an amount of power generated by the plurality of PV cells 604/1002 on the sheet 602/1054 may be maximized. The controller may be configured to determine the number of folds in the sheet 602/1054 such that the amount of power generated by the plurality of PV cells 604/1002 on the sheet 602/1054 may be maximized. Two or more of the one or more folds of the sheet 602/1054 have the same angle value therebetween (e.g., 60 degrees). Two or more folds of the sheet 602/1054 have different angles therebetween (e.g. 70 degrees and 25 degrees).

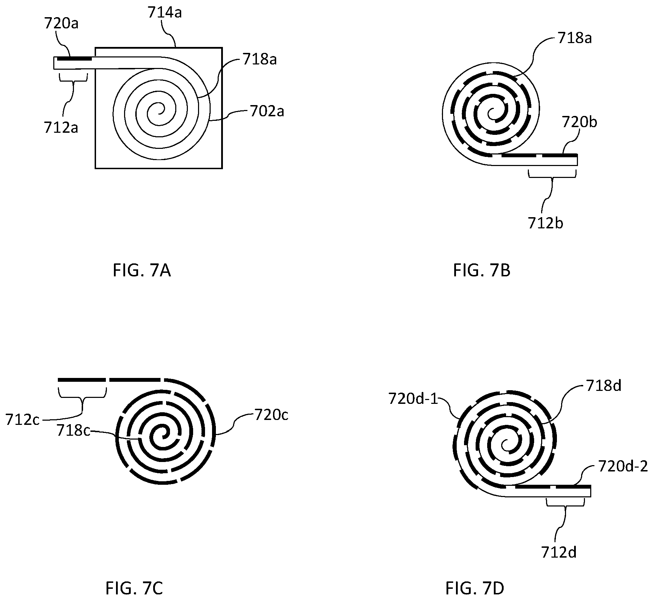

Reference is made to Figure 7A, Figure 7B, Figure 7C, and Figure 7D, which show side view and cross sectional view schematic illustrations of exemplary rolling sheets.

The sheets 702a/702b/702c/702s depicted in Figures 7A, Figure 7B, Figure 7C, and Figure 7D may include or be part of one or more aspects of the device 100 of Figure 1A and Figure 1B, the system 1000 of Figure 1C, the device 200 depicted in Figure 2A and Figure 2B, the device 400/450 depicted in Figure 4A and Figure 4B, the device 500 depicted in Figure 5A and Figure 5B, and the device 600 depicted in Figure 6A, Figure 6B, and Figure 6C, as described herein. The reference numbers of Figure 7A, Figure 7B, Figure 7C, and Figure 7D may correspond to reference numbers of Figure 1A, Figure 1B, Figure 2A, Figure 2B, Figure 4A, Figure 4B, Figure 5A, Figure 5B, Figure 6A, Figure 6B, and Figure 6C (for example, the first plurality of PV cells 1004, 218 and 718, the sheet 702 and 602, etc.) in order to transfer properties and features which may be common.

Figure 7A shows a sheet 702a configured to be rolled in a closed configuration thereof. The sheet 702a/1054 may be disposed in a housing 714a. The sheet 702a/1054 may include a first plurality of PV cells 718a/1004. The sheet 702a may include a second plurality of PV cells 720a/1006. the second plurality of PV cells 720a/1006 may be disposed on a same side of the sheet 702a/1054 as the first plurality of PV cells 718a/1004. The sheet 702a/1054 may include a portion and/or a ridge 712a. The second plurality of PV cells 720a/1006 are located on the portion and/or ridge 712a.

Figure 7B shows a sheet 702b configured to be rolled in a closed configuration thereof. The sheet 702b/1054 may include a first plurality of PV cells 718b/1004. The sheet 702b/1054 may include a second plurality of PV cells 720b/1006. The second plurality of PV cells 720b/1006 may be disposed on a same side of the sheet 702b/1054 as the first plurality of PV cells 718b/1004. The sheet 702b/1054 may include a portion and/or a ridge 712b. The second plurality of PV cells 720b/1006 are located on the portion and/or ridge 712b.

Figure 7C shows a sheet 702c configured to be rolled in a closed configuration thereof. The sheet 702c/1054 may include a first plurality of PV cells 718c/1004. The sheet 702c/1054 may include a second plurality of PV cells 720c/1006. The second plurality of PV cells 720c/1006 may include bifacial PV cells. The second plurality of PV cells 720c/1006 may include bifacial PV cells such that when the sheet 702c/1054 may be at a closed configuration, the second plurality of PV cells 720c/1006 may have at least one side of the bifacial panels which may be exposed to sunlight.

Figure 7D shows a sheet 702d configured to be rolled in a closed configuration thereof. The sheet 702d/1054 may include a first plurality of PV cells 718d/1004. The sheet 702d may include a second plurality of PV cells 720d/1006. The second plurality of PV cells 720d/1006 may have two subsets of PV cells 720d-1/720d-2. The first subset of PV cells 720d-1 may be on a same side (or same surface) of the sheet 702d/1054 as the first plurality of PV cells 718d/1004. The second subset of PV cells 720d-2 may be on an opposite side (or opposing surface) of the sheet 702d/1054 as the first plurality of PV cells 718d/1004. The sheet 702d/1054 may include a portion and/or a ridge 712d. At least one of the subsets of PV cells 720d-1/720d-2 may be positioned on the portion and/or ridge 712d. At least one of the subsets of PV cells 720d-1/720d-2 may be bifacial PV cells.

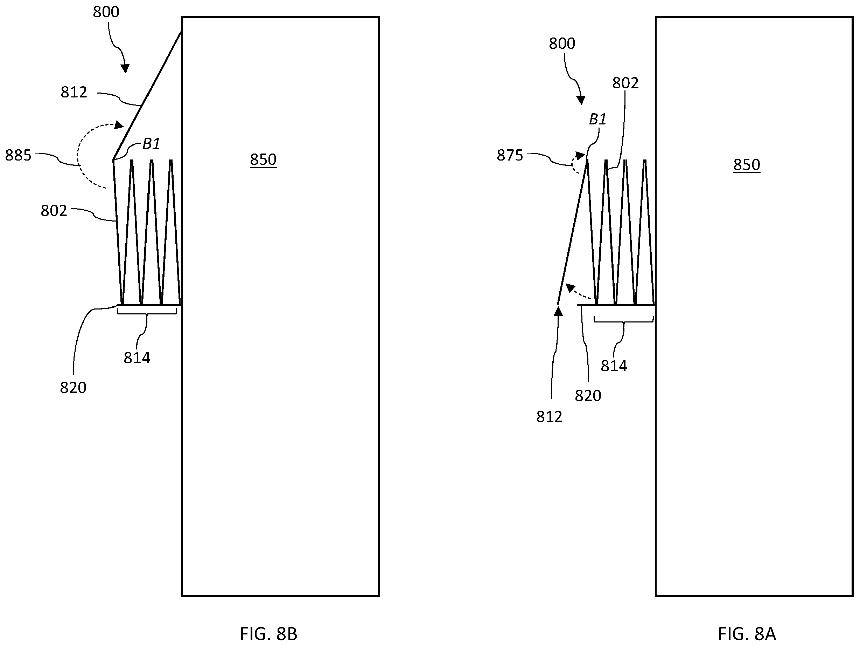

Reference is made to Figure 8A and Figure 8B, which show side view schematic illustrations of a building with an awning.

The device 800 depicted in Figure 8A and Figure 8B may include or be part of one or more aspects of the device 100 of Figure 1A and Figure 1B, the system 1000 of Figure 1C, the device 200 depicted in Figure 2A and Figure 2B, the device 400/450 depicted in Figure 4A and Figure 4B, the device 500 depicted in Figure 5A and Figure 5B, the device 600 depicted in Figure 6A, Figure 6B, and Figure 6C, the and sheets 702 depicted in Figures 7A, Figure 7B, Figure 7C, and Figure 7D as described herein. The reference numbers of Figure 8A, and Figure 8B may correspond to reference numbers of Figure 1A, Figure 1B, Figure 2A, Figure 2B, Figure 4A, Figure 4B, Figure 5A, Figure 5B, Figure 6A, Figure 6B, Figure 6C, Figures 7A, Figure 7B, Figure 7C, and Figure 7D (for example, the sheet 802 and 202, etc.) in order to transfer properties and features which may be common.

The device 800 may be an awning configured to attach to a wall of a building 850. The device 800 may include a sheet 802/1054 comprising a plurality of PV cells, such as described in greater detail elsewhere herein. The sheet 802/1054 may be supported by a rail 820/1038. The sheet 802/1054 may be configured to fold and unfold. At a closed configuration thereof, the sheet 802/1054 may be configured to roll or rotate about one folding axis *B1* of the sheet 802/1054 (for example, as depicted by arrows 875 and 885). The sheet 802/1054 may include a portion 812 configured to fold over the folded portion 814 of the sheet 802/1054. The portion 812 may include one or more PV cells on both sides thereof. The portion 812 may include one or more bifacial PV cells. Advantageously, having a portion 812 of the sheet 802/1054 fold over enables the device 800 to be exposed to sunlight at a closed configuration thereof.

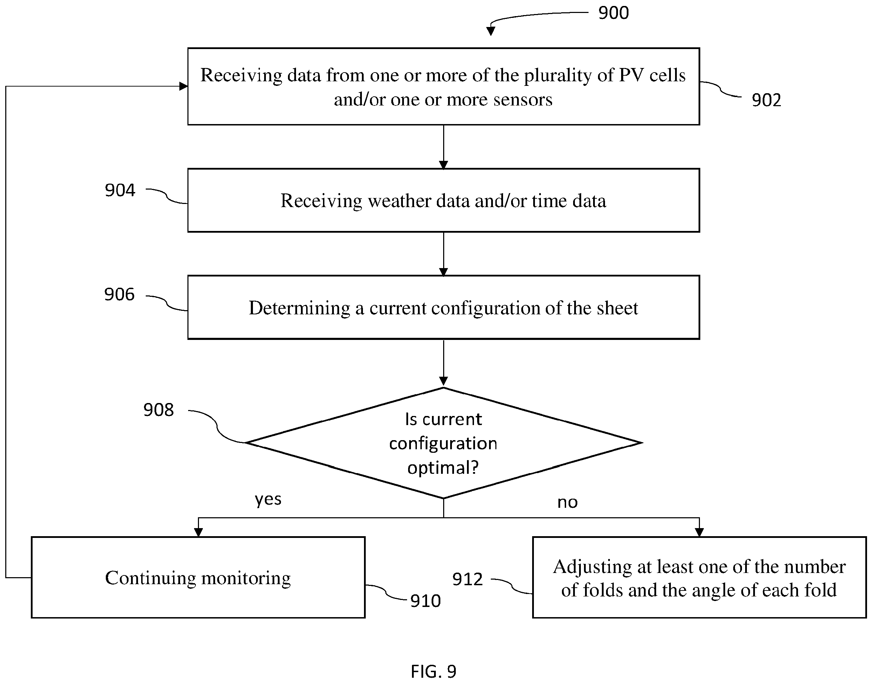

Reference is made to Figure 9, which shows an example flow chart for changing the configuration of a device, in accordance with one or more embodiments of the present disclosure.

The method 900 may include, at step 902, receiving data from one or more of the plurality of PV cells and/or one or more sensors. The method 900 may include, at step 904, receiving weather data and/or time data. The method 900 may include, at step 906, determining a current configuration of the sheet (e.g. 102/202/802/1054). The method 900 may include, at step 908, determining if the current configuration of the sheet is optimal. If the current configuration is optimal, the method may include, at step 910, continuing monitoring the plurality of PV cells and/or one or more sensors. If the current configuration is not optimal, the method may include, at step 912, adjusting at least one of the number of folds and the angle of each fold of the sheet.

The method 900 may include determining a need for changing a configuration of a sheet, such as a sheet of an awning or a pool cover, as described in greater detail elsewhere herein. The method 900 may include optimizing the amount of power generated by the plurality of PV cells of the sheet, or in other words, adjusting the configuration of the sheet such that the amount of power generated by the plurality of PV cells is maximized.

The method 900 may include, at step 902, receiving data from one or more of the plurality of PV cells and/or one or more sensors. The data may include the power generated by the plurality of PV cells. The data may include a trend in the generated power of the plurality of PV cells. The data may include measurements of the one or more sensors. The data may include any one or more of a temperature measurement, or a trend in the temperatures over a day, a week, a month, and the like. The data may include a plurality of temperature measurements at a plurality of locations near or on the sheet. The method 900 may include, at step 904, receiving weather data and/or time data. The weather data may include data associated with the current weather and/or a weather forecast. The time data may be associated with a time of day, time of year, the season, the month, week, and the like.

The method 900 may include, at step 906, determining a current configuration of the sheet. The current configuration of the sheet may include a number of folds the sheet currently has. The current configuration of the sheet may include an angle of each of the folds. The current configuration of the sheet may include the spatial orientation of the rail (e.g. the rail 520/820/1038). The current configuration of the sheet may include the length of the rail. The current configuration of the sheet may take into account the location and/or spatial orientation of the sheet in relation to the building. The current configuration of the sheet may take into account the location of the rail in relation to the building.

The method 900 may include calculating a maximal power generation that can be generated using the sheet. The calculated maximal power generation may be based on data received, such as, for example, weather data and/or time data. The calculated maximal power generation may be based on the physical capabilities of the sheet, such as, for example, the size of the sheet, the number of PV cells of the sheet, and the like. Calculating the maximal power generation may include calculating the predicted power generation of the sheet in one or more configurations. The calculation may be based on, at least in part, the received data. Calculating the maximal power generation may include determining a maximal configuration of the sheet, wherein in the maximal configuration, the power generation of the is maximal (or in other words, a configuration of the sheet in which the power generation is optimal). The maximal configuration may include a configuration in which the power generation is better than all of the other possible configurations. The maximal configuration may include a configuration in which the power generation is better than most of the other possible configurations.

The method 900 may include, at step 908, determining if the current configuration of the sheet is optimal. The method 900 may include comparing between the current configuration of the sheet and the maximal configuration. If the current configuration is the same as the maximal configuration, it is considered to be optimal. If the configuration is optimal, the method may include, at step 910, continuing monitoring the sheet and/or the plurality of PV cells and/or one or more sensors. Monitoring the sheet and/or the plurality of PV cells and/or one or more sensors may include receiving data form the sheet and/or the plurality of PV cells and/or one or more sensors. Monitoring the sheet and/or the plurality of PV cells and/or one or more sensors may include receiving data periodically, such as, for example, every few minutes, every hour, every half hour, every other hour, and the like.

If the current configuration is not optimal, the method may include, at step 912, adjusting at least one of the number of folds and the angle of each fold of the sheet. The method may include operating the motor and/or actuator, thereby adjusting the configuration of the sheet. The method may include extending and/or contracting the rail. The method may include folding and/or unfolding at least a portion of the sheet. The method may include locking a position of the rail once the current configuration is the same as the maximal configuration.

The method may include, when calculating the maximal configuration, taking into account the future maximal power generation. For example, the calculation of the maximal configuration may be based on data associated with a weather forecast. The calculation of the maximal configuration may take into account that the current configuration may affect the future maximal power generation of the sheet.

For example, the received data may include data associated with the cleanliness of the sheet. The maximal power generation of the sheet may be correlated with the cleanliness of the sheet, and thus, when deciding on a maximal configuration, the method may include calculating a configuration in which the sheet remains cleanest and/or becomes cleaner.

For example, if a weather forecast includes the possibility of rain, the maximal configuration may include a configuration in which the sheet is completely open. For example, if a weather forecast includes the possibility of rain, the maximal configuration may include a configuration in which the rail is tilted such that rain water is not trapped on the sheet. For example, the maximal configuration may include an open configuration such that the sheet (or at least a portion of the PV cells) may be cleaned by rainwater.

For example, the weather data may include data associated with an anticipated haze. For example, if a weather forecast includes possibility of haze, the maximal configuration may include a configuration in which the sheet is folded such that the PV cells remain clean. For example, the maximal configuration may include a configuration in which most of the PV cells of the sheet are not exposed. For example, the maximal configuration may include a configuration in which most of the sheet is folded, such that the PV cells remain clean except for one or a few of the PC cells, thereby preventing the sheet from getting dirty from the haze.

## Claims

1. A device, comprising:
a sheet (1054,102,202,402, 452,502,602,702,802) comprising a first plurality of photovoltaic, PV, cells (1004,104,218,404,504,604,718) and a second plurality of PV cells (1006,104,218,404,504,604,720); and
a motor (1040,106) configured to actuate the sheet between an open configuration and a closed configuration,
wherein the first plurality of PV cells are disposed on a first portion of the sheet such that, in the open configuration, the first plurality of PV cells are exposed to sunlight,
**characterized in that** the second plurality of PV cells are disposed on a second portion (112,212,512,612,712,812) of the sheet such that, in the closed configuration, the second plurality of PV cells are exposed to sunlight, and
wherein the motor is configured to operate by power generated by the second plurality of PV cells in the closed configuration.

2. The device of claim 1, wherein in the closed configuration, the sheet is wound about a rotatable shaft (1044,108).

3. The device of any one of claims 1 to 2, wherein in the closed configuration, the sheet (1054,102,602) is accordion folded.

4. The device of any one of claims 1 to 3, wherein the second plurality of PV cells are disposed on an opposite side of the sheet as the first plurality of PV cells.

5. The device of any one of claims 1 to 4, wherein the second plurality of PV cells are disposed on a same side of the sheet as the first plurality of PV cells.

6. The device of any one of claims 1 to 5, wherein the device further comprises a ridge (712), and wherein the second plurality of PV cells are located on the ridge.

7. The device of any one of claims 1 to 6, wherein the sheet comprises air pockets (222) configured to float the sheet on top of a swimming pool in the open configuration.

8. The device of claim 7, wherein the air pockets (222) are configured to deflate when the sheet is actuated from the open configuration to the closed configuration.

9. The device of any one of claims 1 to 8, further comprising a collapsible frame (1038,520).

10. The device of any one of claims 1 to 9, wherein the first plurality of PV cells are configured to provide a direct current, DC, voltage not exceeding 30 volts.

11. The device of any one of claims 1 to 10, wherein the first plurality of PV cells and the second plurality of PV cells comprise a flexible substrate.

12. The device of any one of claims 1 to 11, wherein the first plurality of PV cells and the second plurality of PV cells are flexible.

13. The device of any one of claims 1 to 12, further comprising an electrical energy storage device (1054).

14. A system for covering a pool, comprising: a first pool cover and a second pool cover,
wherein the first pool cover comprises a first device as in claim 1 and an attachment component (464) configured to attach to a portion of a perimeter wall (254) of the pool and the second pool cover comprises a second device as in claim 1 and an attachment component (464) configured to attach to a portion of a perimeter wall (254) of the pool;
wherein the attachment component of the first pool cover and the attachment component of the second pool cover are attached to different portions of the perimeter wall (254).

15. A method for opening a pool cover of a pool (250) using a device as in claim 1 configured as the pool cover, comprising:
operating, via a controller (1010), the motor (1040,106) when the sheet (1054,202) is in the closed configuration;
rotating, via the motor (1040,106), a rotatable shaft (1044) to unwrap the sheet from the rotatable shaft and to extend the sheet from the rotatable shaft; and
inflating, via an inflation device (1042), an inflatable portion (222) of the sheet, thereby enabling flotation of the sheet on water of the pool (250).

## Patentansprüche

1. Vorrichtung mit:
einer Folie (1054, 102, 202, 402, 452, 502, 602, 702, 802), die eine erste Mehrzahl von Photovoltaikzellen (PV-Zellen) (1004, 104, 218, 404, 504, 604, 718) und eine zweite Mehrzahl von PV-Zellen (1006, 104, 218, 404, 504, 604, 720) aufweist; und
einem Motor (1040, 106), der dazu ausgebildet ist, die Folie zwischen einer offenen Konfiguration und einer geschlossenen Konfiguration zu betätigen,
wobei die erste Mehrzahl von PV-Zellen auf einem ersten Teil der Folie angeordnet ist, sodass in der offenen Konfiguration die erste Mehrzahl von PV-Zellen dem Sonnenlicht ausgesetzt ist,
**dadurch gekennzeichnet, dass** die zweite Mehrzahl von PV-Zellen auf einem zweiten Teil (122, 212, 512, 612, 712, 812) der Folie angeordnet ist, sodass in der geschlossenen Konfiguration die zweite Mehrzahl von PV-Zellen dem Sonnenlicht ausgesetzt ist, und
wobei der Motor dazu ausgebildet ist, durch Strom betrieben zu werden, der durch die zweite Mehrzahl von PV-Zellen in der geschlossenen Konfiguration generiert wird.

2. Vorrichtung gemäß Anspruch 1, wobei die Folie in der geschlossenen Konfiguration um eine drehbare Welle (1044, 108) gewickelt ist.

3. Vorrichtung gemäß einem der Ansprüche 1 bis 2, wobei die Folie (1054, 102, 602) in der geschlossenen Konfiguration in Akkordeonfalten gelegt ist.

4. Vorrichtung gemäß einem der Ansprüche 1 bis 3, wobei die zweite Mehrzahl von PV-Zellen auf einer der ersten Mehrzahl von PV-Zellen entgegengesetzten Seite der Folie angeordnet ist.

5. Vorrichtung gemäß einem der Ansprüche 1 bis 4, wobei die zweite Mehrzahl von PV-Zellen auf einer gleichen Seite wie die erste Mehrzahl von PV-Zellen angeordnet ist.

6. Vorrichtung gemäß einem der Ansprüche 1 bis 5, wobei die Vorrichtung ferner einen Grat (712) aufweist und wobei die zweite Mehrzahl von PV-Zellen auf dem Grat angeordnet ist.

7. Vorrichtung gemäß einem der Ansprüche 1 bis 6, wobei die Folie Lufttaschen (222) aufweist, die dazu ausgebildet sind, in der offenen Konfiguration oben auf einem Swimmingpool zu schwimmen.

8. Vorrichtung gemäß Anspruch 7, wobei die Lufttaschen (222) dazu ausgebildet sind, die Luft abzulassen, wenn die Folie von der offenen Konfiguration in die geschlossene Konfiguration betätigt wird.

9. Vorrichtung gemäß einem der Ansprüche 1 bis 8, ferner aufweisend einen zusammenfaltbaren Rahmen (1038, 520).

10. Vorrichtung gemäß einem der Ansprüche 1 bis 9, wobei die erste Mehrzahl von PV-Zellen dazu ausgebildet ist, eine Gleichspannung zu liefern, die 30 Volt nicht übersteigt.

11. Vorrichtung gemäß einem der Ansprüche 1 bis 10, wobei die erste Mehrzahl von PV-Zellen und die zweite Mehrzahl von PV-Zellen ein flexibles Substrat aufweisen.

12. Vorrichtung gemäß einem der Ansprüche 1 bis 11, wobei die erste Mehrzahl von PV-Zellen und die zweite Mehrzahl von PV-Zellen flexibel sind.

13. Vorrichtung gemäß einem der Ansprüche 1 bis 12, ferner aufweisend eine Speichervorrichtung (1054) für elektrische Energie.

14. System zum Abdecken eines Pools, aufweisend: eine erste Poolabdeckung und eine zweite Poolabdeckung,
wobei die erste Poolabdeckung eine erste Vorrichtung gemäß Anspruch 1 und eine Befestigungskomponente (464) aufweist, die dazu ausgebildet ist, an einem Teil einer Umfassungsmauer (254) des Pools befestigt zu werden, und die zweite Poolabdeckung eine zweite Vorrichtung gemäß Anspruch 1 und eine Befestigungskomponente (464) aufweist, die dazu ausgebildet ist, an einem Teil einer Umfassungsmauer (254) des Pools befestigt zu werden;
wobei die Befestigungskomponente der ersten Poolabdeckung und Befestigungskomponente der zweiten Poolabdeckung an unterschiedlichen Teilen der Umfassungsmauer (254) befestigt sind.

15. Verfahren zum Öffnen einer Poolabdeckung eines Pools (250), die eine Vorrichtung gemäß Anspruch 1 nutzt, die als die Poolabdeckung ausgebildet ist, aufweisend:
Betreiben des Motors (1040, 106) über einen Controller (1010), wenn die Folie (1054, 202) in der geschlossenen Konfiguration ist;
Drehen einer drehbaren Welle (1044) über den Motor (1040, 106) zum Abwickeln der Folie von der drehbaren Welle zum Ausbreiten der Folie von der drehbaren Welle; und
Aufblasen eines aufblasbaren Teils (222) der Folie über eine Aufblasvorrichtung (1042), wodurch ein Schwimmen der Folie auf Wasser des Pools (250) ermöglicht wird.

## Revendications

1. Dispositif, comprenant:
une feuille (1054, 102, 202, 402, 452, 502, 602, 702, 802) comprenant une première pluralité de cellules photovoltaïques, PV, (1004, 104, 218, 404, 504, 604, 718) et une seconde pluralité de cellules PV (1006, 104, 218, 404, 504, 604, 720); et
un moteur (1040, 106) configuré pour actionner la feuille entre une configuration ouverte et une configuration fermée,
dans lequel la première pluralité de cellules PV est disposée sur une première partie de la feuille de telle sorte que, dans la configuration ouverte, la première pluralité de cellules PV est exposée à la lumière du soleil,
**caractérisé en ce que** la seconde pluralité de cellules PV est disposée sur une seconde partie (112, 212, 512, 612, 712, 812) de la feuille de telle sorte que, dans la configuration fermée, la seconde pluralité de cellules PV est exposée à la lumière du soleil, et
dans lequel le moteur est configuré pour fonctionner grâce à l'énergie générée par la seconde pluralité de cellules PV dans la configuration fermée.

2. Dispositif selon la revendication 1, dans lequel, dans la configuration fermée, la feuille est enroulée autour d'un arbre rotatif (1044, 108).

3. Dispositif selon l'une quelconque des revendications 1 à 2, dans lequel, dans la configuration fermée, la feuille (1054, 102, 602) est pliée en accordéon.

4. Dispositif selon l'une quelconque des revendications 1 à 3, dans lequel la seconde pluralité de cellules PV est disposée sur un côté de la feuille opposé à celui de la première pluralité de cellules PV.

5. Dispositif selon l'une quelconque des revendications 1 à 4, dans lequel la seconde pluralité de cellules PV est disposée sur un même côté de la feuille que la première pluralité de cellules PV.

6. Dispositif selon l'une quelconque des revendications 1 à 5, dans lequel le dispositif comprend en outre une nervure (712), et dans lequel la seconde pluralité de cellules PV est située sur la nervure.

7. Dispositif selon l'une quelconque des revendications 1 à 6, dans lequel la feuille comprend des poches d'air (222) configurées pour faire flotter la feuille à la surface d'une piscine dans la configuration ouverte.

8. Dispositif selon la revendication 7, dans lequel les poches d'air (222) sont configurées pour se dégonfler lorsque la feuille est actionnée de la configuration ouverte à la configuration fermée.

9. Dispositif selon l'une quelconque des revendications 1 à 8, comprenant en outre un cadre pliable (1038, 520).

10. Dispositif selon l'une quelconque des revendications 1 à 9, dans lequel la première pluralité de cellules PV est configurée pour fournir une tension en courant continu ,CC, ne dépassant pas 30 volts.

11. Dispositif selon l'une quelconque des revendications 1 à 10, dans lequel la première pluralité de cellules PV et la seconde pluralité de cellules PV comprennent un substrat flexible.

12. Dispositif selon l'une quelconque des revendications 1 à 11, dans lequel la première pluralité de cellules PV et la seconde pluralité de cellules PV sont flexibles.

13. Dispositif selon l'une quelconque des revendications 1 à 12, comprenant en outre un dispositif de stockage d'énergie électrique (1054).

14. Système pour couvrir une piscine comprenant: une première couverture de piscine et une seconde couverture de piscine,
dans lequel la première couverture de piscine comprend un premier dispositif selon la revendication 1 et un composant de fixation (464) conçu pour la fixation à une partie d'une paroi périphérique (254) de la piscine et la seconde couverture de piscine comprend un second dispositif selon la revendication 1 et un composant de fixation (464) conçu pour la fixation à une partie d'une paroi périphérique (254) de la piscine;
dans lequel le composant de fixation de la première couverture de piscine et le composant de fixation de la seconde couverture de piscine sont fixés à des parties différentes de la paroi périphérique (254).

15. Procédé pour ouvrir une couverture de piscine d'une piscine (250) à l'aide d'un dispositif selon la revendication 1 configuré comme couverture de piscine, comprenant:
la commande, par l'intermédiaire d'un organe de commande (1010), du moteur (1040, 106) lorsque la feuille (1054, 202) est dans la configuration fermée;
la rotation, par l'intermédiaire du moteur (1040, 106), d'un arbre rotatif (1044) pour dérouler la feuille depuis l'arbre rotatif et pour étendre la feuille depuis l'arbre rotatif; et
le gonflage, par l'intermédiaire d'un dispositif de gonflage (1042), d'une partie gonflable (222) de la feuille, permettant ainsi le flottement de la feuille sur l'eau de la piscine (250).
